# EUROPEAN PATENT APPLICATION

(11) **EP 4 645 873 A1**
(43) Date of publication of application: **05.11.2025**
(21) Application number: 23912445.6
(22) Date of filing: 07.09.2023
(51) Int. Cl.: H04N 21/2381, H04N 21/2343, H04N 21/235, H04N 21/236, H04N 21/2385, H04N 21/4402, H04N 21/61, H04H 20/93, H04H 60/42

(54) **MEDIA DATA PROCESSING METHOD AND MEDIA DATA PROCESSING DEVICE**

(30) Priority: 28.12.2022 KR 20220187935
(71) Applicant: LG Electronics Inc., Yeongdeungpo-gu Seoul 07336 (KR)
(72) Inventor: PARK, Jonghwan, Seoul 06772 (KR); YOON, Joonhee, Seoul 06772 (KR)
(74) Representative: Plasseraud IP
(86) International application number: PCT/KR2023/013405
(87) International publication number: WO 2024/143761

(57) **Abstract**

: A media data processing method according to embodiments may comprise the steps of: generating media data; generating a service list for the media data; and transmitting the media data and the service list on the basis of a network. A media data processing method according to embodiments may comprise the steps of: receiving media data and a service list for the media data on the basis of a network; and processing the media data on the basis of the service list.

## Description

### [Technical Field]

The present disclosure relates to a media data processing method and a media data processing device.

### [Background Art]

There is no method for implementing an IP-based TV service capable of providing the same user experience (UX) as terrestrial, satellite, or cable linear channel.

There is no method for providing a channel guide integrated with the terrestrial, satellite, or cable channel through open Internet-based native code reception rather than an app-based linear channel service.

There is no integrated broadcasting system protocol based on all of terrestrial wave, satellite, cable, and the Internet.

There is no method for acquiring Internet broadcast service signaling by a receiver without a terrestrial, satellite, or cable tuner.

There is no service discovery system for acquiring a broadcast service based on Internet transmission.

There is no Internet-based broadcast service signaling mechanism.

There is no method for maintaining the updated state of a content guide corresponding to the DVB-I service.

### [Disclosure]

### [Technical Problem]

An object of the embodiments is to provide a media data processing device for implementing an IP-based TV service capable of providing the same user UX as the terrestrial, satellite, or cable linear channel.

An object of the embodiments is to provide a media data processing device for providing a channel guide integrated with the terrestrial, satellite, or cable channel through open Internet-based native code reception rather than an application-based linear channel service.

An object of the embodiments is to provide a media data processing device for seamlessly providing a real-time/non-real-time media streaming service rather than directly receiving terrestrial (fixed) waves, in consideration of a situation where broadcast services are consumed through media such as OTT, PC, IPTV, and the like of IP-based devices, as well as high traffic of unicast.

### [Technical Solution]

A media data processing method according to embodiments may include generating media data; generating a service list related to the media data; and transmitting the media data and the service list based on a network. A media data processing method according to embodiments may include receiving media data and a service list related to the media data based on a network; and processing the media data based on the service list.

### [Advantageous Effects]

A receiver not equipped with a traditional tuner may efficiently discover and acquire an Internet-based broadcast service over a broadband network.

In receiving an aggregated service list according to embodiments, the versioning/expiration management method for each service and the selective parsing and storage of each service may eliminate the need to receive the entire service list.

Content or user experience that may provide services suitable for capability may be efficiently provided.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 shows a service scenario according to embodiments;
FIG. 2 is a flowchart of an operation according to embodiments from the perspective of a network operator/ISP according to embodiments;
FIG. 3 shows a stack of protocols for DVB channel services according to embodiments;
FIGS. 4A and 4B show a service list hierarchy according to embodiments;
FIGS. 5A and 5B show a table representation of a DVB-I service list type according to embodiments;
FIGS. 6A and 6B show a DVB-I service type according to embodiments;
FIGS. 7A, 7B, and 7C show a service instance type according to embodiments;
FIG. 8 shows DASH delivery parameters for simulcast according to embodiments;
FIG. 9 shows options for selecting a service instance based on DASHDeliveryParametersType according to embodiments;
FIG. 10 shows an example of a DVB-I service instance according to embodiments;
FIG. 11 illustrates a simulcast UI/UX according to embodiments;
FIG. 12 shows a 5G-based DVB-I system according to embodiments;
FIGS. 13A and 3B show a DVB-I service scheme extension according to embodiments;
FIG. 14 shows information for service instance switching according to embodiments;
FIG. 15 shows an example of service instance switching according to embodiments;
FIG. 16 shows an example of service instance switching according to embodiments;
FIG. 17 shows a 5GBC instance and an OTT instance according to embodiments;
FIG. 18 shows a hybrid service scenario according to embodiments;
FIG. 19 shows a DVB-I service list discovery procedure according to embodiments;
FIGS. 20A, 20B, and 20C illustrate a DVB-I service list acquisition method according to a delivery method in DVB-I discovery according to embodiments;
FIG. 21 shows DVB-I for network broadcast according to embodiments;
FIGS. 22A and 22B show DVB-I in a 5GBC structure according to embodiments;
FIG. 23 illustrates a method of acquiring a group message using a service ID according to embodiments;
FIGS. 24A and 24B show a group message acquisition procedure according to embodiments;
FIGS. 25A and 25B show an extension of a DVB-I service list offering delivery type for 5GBC according to embodiments;
FIG. 26 shows a DVB 5GBC delivery type according to embodiments;
FIG. 27 shows a DVB-I ServiceInstanceType extension for supporting 5GBC according to embodiments;
FIG. 28 shows a DVB 5GBC delivery parameters type according to embodiments;
FIGS. 29A and 29B show a 5GBC service acquisition procedure according to embodiments;
FIG. 30 shows 3GPP 5G transmission system information and information for connection between DVB-I applications according to embodiments;
FIG. 31 shows a DVB-I over 5G receiver structure according to embodiments;
FIG. 32 shows a flow of DVB-I standard discovery-based 5G media discovery according to embodiments;
FIG. 33 shows a service list registry query method and service entry point extension method for accessing an MBMS SA channel in a DVB-I standard-based 5G media client according to embodiments;
FIG. 34 shows extensions of DVB-I over 5G service types and service instance according to embodiments;
FIG. 35 shows a service type extension according to embodiments;
FIG. 36 shows ServiceInstanceType according to embodiments;
FIG. 37 shows DASHDeliveryParametersType according to embodiments;
FIG. 38 is a flowchart illustrating provisioning of DVB-I services over 5G media streaming according to embodiments;
FIG. 39 is a flowchart illustrating discovery of DVB-I services according to embodiments;
FIG. 40 is a flowchart illustrating selection of a DVB-I service according to embodiments;
FIG. 41 illustrates a media data processing method according to exemplary embodiments; and
FIG. 42 illustrates a media data processing method according to embodiments.

### [Best Mode]

Hereinafter, embodiments of the present disclosure will be described in detail with reference to the accompanying drawings. The same or similar components are given the same reference numbers and redundant description thereof is omitted. The suffixes "module" and "unit" of elements herein are used for convenience of description and thus are used interchangeably and do not have any distinguishable meanings or functions. Further, in describing the embodiments disclosed in this specification, if a detailed description of related known techniques would unnecessarily obscure the gist of the embodiments disclosed in this specification, detailed description thereof will be omitted. In addition, the attached drawings are provided for easy understanding of the embodiments disclosed in this specification and do not limit technical idea disclosed in this specification, and the embodiments should be construed as including all modifications, equivalents, and alternatives falling within the spirit and scope of the present disclosure.

It is apparent that the following embodiments are intended to embody the present disclosure and are not intended to limit or restrict the scope of the present disclosure. All techniques easily conceivable by those skilled in the art from the detailed description and embodiments of the present disclosure are interpreted as belonging to the scope of the present disclosure.

The following detailed description is to be construed in all aspects as illustrative and not restrictive. The scope of the present disclosure should be determined by reasonable interpretation of the appended claims and all changes which come within the equivalent scope of the present disclosure are within the scope of the present disclosure.

Reference will now be made in detail to the exemplary embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details. Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings. In addition, the accompanying drawings and the detailed description should not be construed as limiting the embodiments set forth herein and should be interpreted as covering all equivalents to the embodiments disclosed in the accompanying drawings and the detailed description or other substitutions.

A media data processing method/device according to embodiments may refer to a media data transmission/reception method/device. The media data processing method/device according to the embodiments may be simply referred to as a method/device according to the embodiments.

The method/device according to embodiments relates to a method for discovering and acquiring Internet-based broadcasting-related media data (which may be referred to as a service).

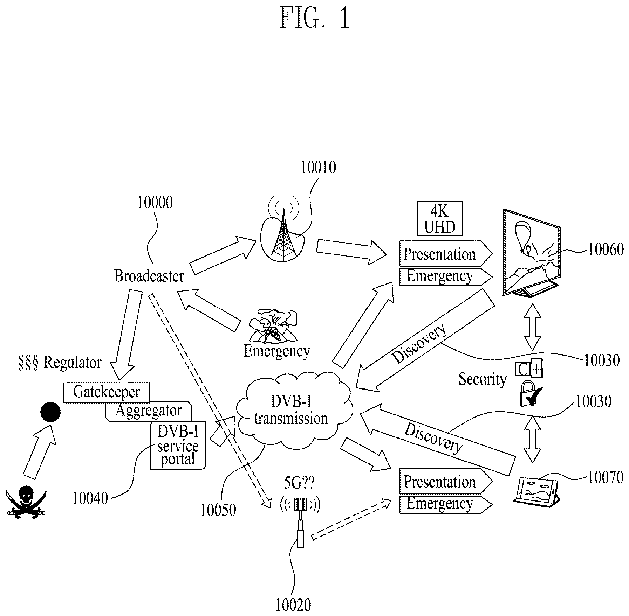

FIG. 1 shows a service scenario according to embodiments.

The method/device according to the embodiments may provide a method for supporting DVB-I standard based multi-viewport user personalization.

The method/device according to the embodiments may provide a communication network extension method such as DVB-I over 5G extension and 6G extension.

The method/device according to the embodiments may provide an additional web image extension considering DVB-I backward compatibility.

Embodiments provide a service discovery scheme to provide an Internet-based broadcast service.

Embodiments propose additional information that should be defined for Internet-based broadcast service identification.

Embodiments provide a system mechanism for acquiring Internet-based broadcast service signaling.

Embodiments propose a versioning/expiration management method for each service and a selective parsing and storage method for each service in receiving an aggregated service list.

Embodiments propose a channel management method carried out when an Internet linear channel is hidden/selectable/inactive.

Embodiments propose a service discovery signaling scheme to provide an Internet-based broadcast service.

Embodiments provide a service list metadata envelope structure used in transmitting a fragmented service list for each unique service in a multipart/related container.

Embodiments provide a method for indicating a current channel state to the user or providing an alternative channel when the user directly accesses the current channel in the hidden/selectable/inactive case of an Internet linear logical channel.

According to embodiments, a receiver not equipped with a traditional tuner may be allowed to perform Internet-based broadcast service discovery and acquirement over a broadband network.

According to embodiments, in receiving an aggregated service list, a versioning/expiration management method for each service and selective parsing and storage of each service may be performed, thereby eliminating the need to receive the entire aggregated service list.

According to embodiments, a better media service may be provided by blocking a logical channel service that fails to provide broadcasting and causes inconvenience to users and providing an Internet return channel alternative service when the Internet linear channel is hidden/selectable/inactive.

The traditional IP-based linear channel service is operated in a manner that authentication is granted through the subscription of a specific provider (e.g., an ISP, a network operator) and an IP linear service is received through the set-top box (STB) provided by the provider. In addition, recently, connectivity TVs have been introduced, thereby making a set-top boxless (STB-less) IP linear service available. Representative standard technologies are ATSC 3.0, IBB, and HbbTV. Clients may be provided with various linear rich-media services by operating an application on the OS platform inside the TV. Various operators provide their own developed service application to be installed on the TV platform, and the application defines a server that may receive data for the service and APIs that enable request/reception. On the basis of the life cycle, the client may access the app through the TV UI and receive various services through the app.

In North America and Europe, the popularity of OTT channels is as high as watching linear TV worldwide, and the OTT has become an essential media application for IP-based devices with the expansion of the OTT market. However, the influential form of OTT has become an exclusive service through its own platform and a service eco-system dedicated to the OTT. In other words, the OTT forms its own app-ecosystem consumption pattern in terms of codec, protocol stack, application, browser, and the like that only each OTT provides.

In this regard, embodiments propose a method and an device that may address issues such as the exclusive platform of OTTs and dependency on the operation of applications.

Embodiments propose a service that discovers a service by which a service is discovered at a receiver native level and a client accesses an accessible service server and receives a linear service, in contrast with conventional technology that requires an App to be executed to provide a channel UX similar to the terrestrial (T), satellite (S), or cable (C) linear channel service.

In addition, embodiments propose a service scenario in which the OTT's own platform is integrated into a single unified TV native platform to allow users to receive and view OTT content on a channel without executing an OTT app.

Referring to FIG. 1, a broadcaster 10000 may transmit a service on a terrestrial (T), satellite (S), or cable (C) channel 10010 and an Internet channel 10020 simultaneously. Service providers and manufacturers of devices capable of receiving a DVB-I service 10050 may obtain authentication of a service channel through regulation and provide Internet channels through existing linear services and channel aggregators.

In order to present a list of existing linear broadcasting channels (for example, terrestrial, satellite, and cable channels) and an Internet channel list in an aggregated form, bootstrap 10030 may be operated based on service discovery information provided over the existing linear network.

On the broadcaster side, the existing traditional service provision type may be extended, and additional services may be provided in the form of an on-demand/multicast service along with the existing linear channel network. In addition, a personalization service may be provided through a connection-based usage report of an Internet channel.

From the perspective of TV/STB manufacturers, by providing a channel list 10040 aggregating OTT services with traditional T/S/C channels, opportunities to provide various services and expand the functions of the terminal may be obtained.

In the case of the network/ISP, OTT contents may be aggregated through their network infrastructure to expand service provision. In addition, through dynamic allocation of unicast/multicast, delivery performance enhanced compared to that of a terminal providing a non-management network-based service may be provided.

In other words, the broadcaster 10000 may transmit broadcast data over the traditional broadcast network 10010 and the Internet network 10020. A reception device according to embodiments, for example, a TV 10060 or a second device 10070 may make a request for the service discovery 10030 of the broadcast data to the DVB-I provider or server 10050, and receive the aggregated DVB-I service list 10040. Thus, service signaling may be performed on both the traditional linear channel and the Internet channel without the process of installing and executing a separate app at the native level.

The method/device according to the embodiments may address issues disclosed below, based on the structure shown in FIG. 1.

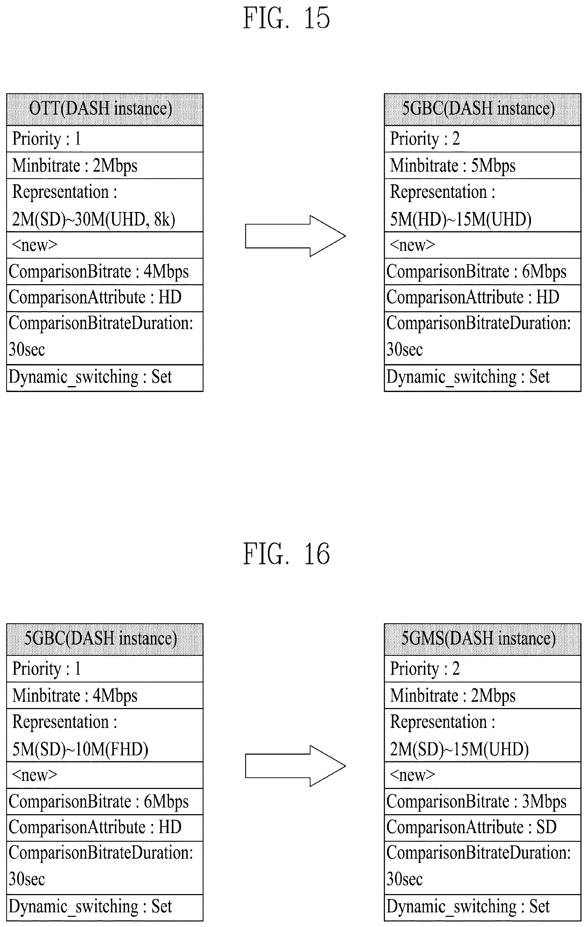

When the next/now guide information is provided through a metadata update period, the end point of the request for the entire service list or an individual service may be the same. The limitation that an individual period cannot be configured for each service and that protocol communication must be performed with the same endpoint may be resolved through @minimumMetadataUpdatePeriod in the DVB-I service hierarchy (see FIG. 15, etc.) according to embodiments.

When the manufacturer service repository is added to one of the DVB-I service discovery entities in the central service repository or the private repository, information for handling supportable device capabilities may be provided.

That is, information for determining whether the service list required by a client is supportable within the device may be provided.

In the DVB-I according to the embodiments, a service may be mainly received based on a service list. Each service list may be operated and managed by a specific repository. A repository providing the existing DVB broadcasting list may define a DVB-I service list in a manner of allocating an LCN based on the country or specific region due to the characteristics of the current European broadcasting service. On the other hand, specific DVB-I service list providers collect independent services regardless of regions and define an LCN list, and accordingly LCN allocation may be configured as desired by the service list providers. Therefore, in this background, there is a potential issue of channel collision when the DVB-I client receives and merges multiple service lists.

In DVB-I over 5G, the service should be smooth and continuous between delivery routes supported by multiple distributions, and should be provided through efficient and flexible connection according to the optimal network environment.

There is no issue in service continuity and synchronization because media data is received only through the restful API at a location specified in the service app regardless of the existing network connection type. On the other hand, in the case of DVB-I for 5G, the bootstrapping process may differ among the types of networks, and the bootstrapping method and location may depend on the infrastructure of the operators.

The propagation delay delivered varies according to the network characteristics. Thus, in the case of a linear service, each network may provide a different environment for the reference time and media characteristics.

Discovery URL and media location URL differ among operators, and it is difficult to perform complete switching in the middle of the media.

There are no clear reference for determining the need for switching within the network and the degradation of signal quality.

In configuring a user interface (UI) through a service list and presenting the service list to users, it is not clear how specific information such as audio, video, and subtitle information should be. Further, in contrast with conventional broadcast transmission, an acquisition path of audio, video, and subtitles constituting content such as HDR/HFR is present at the MPD level, and thus information may not be known at the stage of service UI configuration.

A predefined TVA attribute contains only basic information (frame rate/resolution) related to audio, video, and subtitles and is thus insufficient for user access/download.

There is a need for additional requirements for a user personalization service in a DVB-I service, and embodiments provide a solution to overcome limitations related to technical configurations that are difficult to support by the current DVB-I standard.

Embodiments provide a service discovery scheme to provide an Internet-based broadcast service.

Embodiments propose additional information that should be defined for Internet-based broadcast service identification.

Embodiments provide a system mechanism for acquiring Internet-based broadcast service signaling.

Embodiments propose a versioning/expiration management method for each service and a selective parsing and storage method for each service in receiving an aggregated service list.

Embodiments propose a channel management method carried out when an Internet linear channel is hidden/selectable/inactive.

Embodiments may provide a method of addressing an issue of presenting the information of the existing program guide rather than the up-to-date information about the content currently being consumed when a live program of the DVB-I service is over-running.

A new element and end point extension to which an individual period is applicable for each service may be implemented.

When the DVB-I client receives and aggregates multiple service lists, the issue of channel collision may be addressed.

Proper alignment may be provided between service instances such that switching between service instances delivered over different networks may be recognized to be reasonably smooth.

Switching between DVB-I service instances including 5GBC, 5GMS, and OTT (non-5G networks such as LTE and Wi-Fi) may be performed.

Embodiments extend service instances such that essential information for content selection may be displayed on a service/content guide UI based on information provided by a service discovery server or a service list server.

Embodiments extend, through TVA attribute extension, information that is provided by the existing scheme and extend ClassificationSchemeType for defining specific video information.

Subpicture information in the MPEG versatile video coding (VVC) codec is merely coordinates/size indicating a position, additional information for control at a CTU level required in a video encoding process, or position information from the codec perspective, and does not mean specific coordinates or pixel positions for rendering. In other words, information about a rendering position is not defined, and thus additional related extension is required

Embodiments propose a service discovery signaling scheme to provide an Internet-based broadcast service.

Embodiments provide a service list metadata envelope structure used in transmitting a fragmented service list for each unique service in a multipart/related container.

Embodiments provide a method for indicating a current channel state to the user or providing an alternative channel when the user directly accesses the current channel in the hidden/selectable/inactive case of an Internet linear logical channel.

To address issues such as over-running of a live program of the DVB-I service and provision of information of the existing program guide in place of the up-to-date information about the content currently being consumed, the following information may be used according to embodiments: (1) reference time information for applying a dynamic polling interval; (2) an offset of x sec from the reference time information (e.g., DVB-I service availability end time); (3) a polling interval to be newly applied; and (4) version information for comparison with the existing information.

The method/device according to the embodiments may perform dynamic polling based on the above information and @MinimumMetadataUpdatePeriod.

In allocating a logical channel number corresponding to a single service, an indication that the corresponding channel is a channel to which dynamic polling is applied instead of a static pull method may be provided.

When the now/next content guide source currently consumed is acquired in the DVB-I hierarchy, the information of @ScheduleEndPoint in ContentSourceType may be defined as the same end point in the service list type and the service list, and related information may be requested and received. Information about individual intervals may be acquired for each service.

scheduleInfoEndPoint may be generated to request and receive event information in a specific interval.

The DVB-I client may receive service discovery entities in the bootstrapping process, and display list entries filtered according to language, country, region, and postcode. Service entities and their service entity repositories adapted to the user selection or environment may be searched. In this case, the service list repository operated by a manufacturer may be searched and device capability information for checking whether the service list is supported may be defined.

When the DVB-I client receives and aggregates multiple service lists, a specific condition may be assigned to the channel allocated to each service such that channel management may be performed within the DVB-I client. To this end, <LCNTableEntryType> may be extended in the current DVB-I service list scheme.

The service list scheme may be extended to support time alignment between service instances delivered over different networks.

To support service instance switching, the DASH delivery parameter may be extended in the following DVB-I service list scheme.

According to embodiments, by extending related information, criteria for service selection may be clarified for the user. In addition, from the receiver perspective, clear information may be presented on a UI/UX by performing service filtering.

Embodiments may propose a solution for scene description and rendering information for displaying VVC encoding-based subpictures.

In embodiments, scene description information may be extended at a position at which video characteristics are defined in DVB-I and DASH layers, which are system layers, and information about the hierarchy actually encapsulating a subpicture may be referenced.

In embodiments, receiver operation and receiver backward compatibility for supporting a related use case may be considered.

A receiver not equipped with a conventional tuner may perform Internet-based broadcast service discovery and acquirement over a broadband network.

In receiving an aggregated service list, a versioning/expiration management method for each service and selective parsing and storage of each service may be performed, thereby eliminating the need to receive the entire aggregated service list.

A better media service may be provided by blocking a logical channel service that does not provide broadcasting and causes inconvenience to users and providing an Internet return channel alternative service when the Internet linear channel is hidden/selectable/inactive.

When tune-in or channel change is performed, the device according to the embodiments may display up-to-date information about a corresponding channel rather than showing the guide of an over-running program.

A client-side algorithm for DVB-I dynamic polling may be defined in the entire attributes of the content guide at the service list level to control the polling operation of the entire content guide, or may be defined at the service level to apply the dynamic polling algorithm to individual services.

A separate caching module configured to manage a logical channel database corresponding to the service in the DVB-I client may dynamically process the attribute of the channel to pre-indicate that the dynamic polling algorithm is applied to the channel in updating services at once or individually.

In updating the DVB-I service event or content guide information, the up-to-date information in the client may be updated by adding an end point for updating individual intervals for each service.

Depending on the device, service entities and service entity repositories thereof adapted to the user selection or environment may be searched, and a service list supported by a specific manufacturer may be retrieved to provide an opportunity to consume the services.

When the DVB-I client receives and merges multiple service lists or receives an additional service list on the default legacy channel, a channel ordering method that may reflect the intention of the service provider and be handled by the DVB-I client without any issue may be provided.

A service should be smooth and continuous between delivery routes supported by multiple distributions including 5GBC, 5GMS, and OTT in DVB-I, and may be provided to users through efficient and flexible connection according to the optimal network environment.

Embodiments may clearly present a service that may be currently provided to the user, through extended information, induce rational selection, and clarify criteria for service selection.

Embodiments may provide a personalized service by transmitting several subpictures in a DVB-I based service and providing different viewports according to modes.

For the method/device according to the embodiments, reference may be made to document DVB-I A177.

In the conventional IP-based linear channel service, authentication is granted through the subscription of a specific provider (e.g., an ISP, a network operator) and an IP linear service is received through the set-top box (STB) provided by the provider. In addition, recently, connectivity TVs have been introduced, thereby making a set-top boxless (STB-less) IP linear service available. Representative standard technologies are ATSC 3.0, IBB, and HbbTV. Clients may be provided with various linear rich-media services by operating an application on the OS platform inside the TV. Various operators provide their own developed service application to be installed on the TV platform, and the application defines a server that may receive data for the service and APIs that enable request/reception. On the basis of the life cycle, the client may access the app through the TV UI and receive various services through the app.

In North America and Europe, the popularity of OTT channels is as high as watching linear TV worldwide, and the OTT has become an essential media application for IP-based devices with the expansion of the OTT market. However, the influential form of OTT has become an exclusive service through its own platform and a service eco-system dedicated to the OTT. In other words, the OTT forms its own app-ecosystem consumption pattern in terms of codec, protocol stack, application, browser, and the like that only each OTT provides.

Currently, for DVB-I, a reference client application is being developed in the industry based on the A177 document. The DVB-I standardization group is identifying development related issues and problems of the current standard and proceeding with clarification for appropriate extension and smooth development.

A method to solve an over-running issue while maintaining backward compatibility of DVB-I phase 1 has been devised.

When a client-side algorithm for DVB-I dynamic polling is applied, a different role and receiver operation are performed according to DVB-I service hierarchy, and thus the receiver operation according to the position of @MinimumMetadataUpdatePeriod has been described above.

Since a content guide manager and a service list manager perform separate parsing and caching processes and need to indicate a channel that may be dynamically changed in the process of managing acquired LCN DB information, the information is extended.

In allocating a logical channel number corresponding to a single service, indication information indicating that the corresponding channel is a channel to which dynamic polling, rather than a static pull scheme, is applied may be added.

In the DVB-I phase 1 scheme, data is received according to the pull-only method, and accordingly it may not be checked whether the up-to-date information of the code level is acquired. In this technical background, in order to update the up-to-date information, the DVB-I client of the device according to the embodiments may address the issue through a specific polling interval.

In the current service hierarchy, event information may be acquired at once from a service list or service level. However, the method is the same at both levels, and thus updating a specific interval for each individual service may be impossible. Thus, the solution is proposed.

In this regard, the disclosure proposes a method and a device that may address issues such as the exclusive platform of OTTs and dependency on the operation of applications.

Embodiments propose a service in which the receiver discovers a service at the native level and the client accesses an accessible service server to receive a linear service, in contrast with conventional technology that requires an App to be executed to provide a channel UX similar to the T, S, or C linear channel service.

In addition, embodiments propose a service scenario in which the OTT's own platform is integrated into one unified TV native platform to allow users to receive and view OTT content on a channel without executing an OTT app.

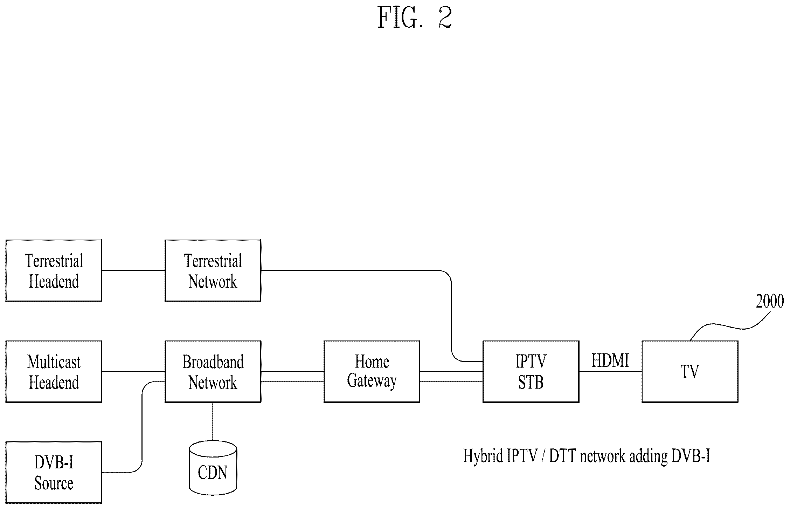

FIG. 2 is a flowchart of an operation according to embodiments from the perspective of a network operator/ISP according to embodiments.

The device 20000 according to the embodiments may be a TV receiver. That is, it may be a device according to a hybrid IPTV/DTT network that supports DVB-I service. The reception device 20000 may be connected to an STB. The connection may be established by, for example, HDMI. The IPTV STB may receive a terrestrial broadcast signal from a terrestrial headend over a terrestrial network, and may receive various services and/or data from a multicast headend, which provides multicast services, a DVB-I source, which provides DVB-I services, and/or a content delivery network (CDN), which provides Internet content or the like, through a home gateway and a broadband network.

In particular, in the case of OTT, an OTT application suitable for a different OS environment is separately provided for each existing terminal. However, the method/device according to the embodiments may use a service through an industry standard based ecosystem without such a separate application. This provides a common service interface, thereby providing a convenient and efficient service access.

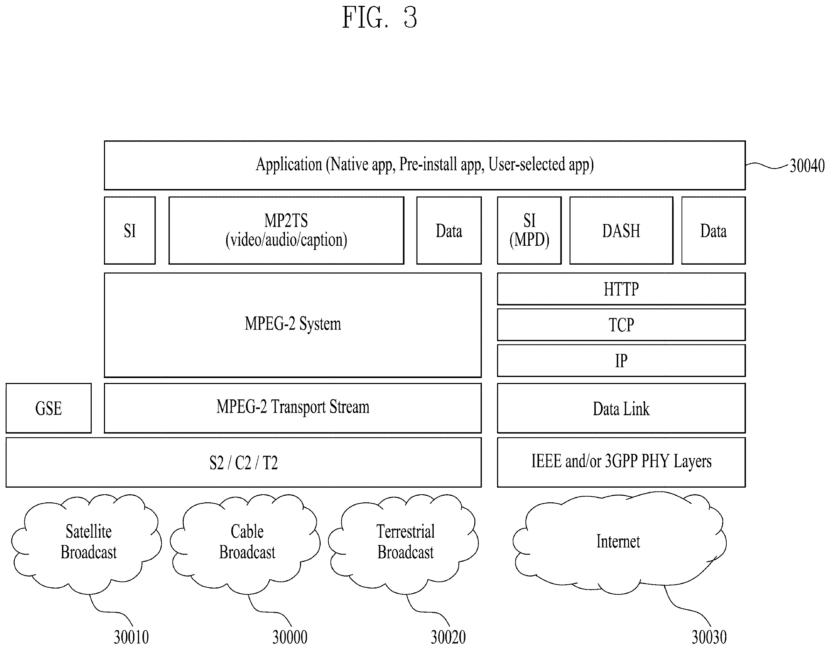

FIG. 3 shows a stack of protocols for DVB channel services according to embodiments.

The TV device 20000 of FIG. 2 may perform the scenario of FIG. 1 based on the protocol structure of FIG. 3.

Services according to embodiments include DVB C/S/T/I services. Based on the protocol stack structure constituting the DVB-C (30000)/S (30010)/T (30020)/I (30030) service of FIG. 3, the embodiments propose a mechanism for discovering a DVB-I service transmitted through the Internet and a signaling scheme therefor. The method/device according to the embodiments may drive an application through service discovery, and an application 30040 according to the embodiments may include a native application, a pre-installed application, and a user-selected application.

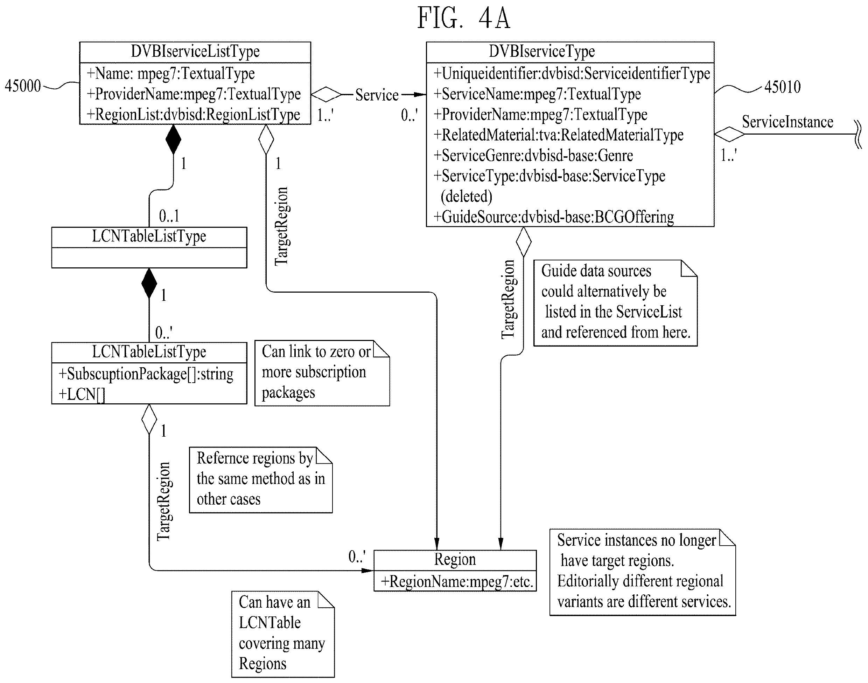

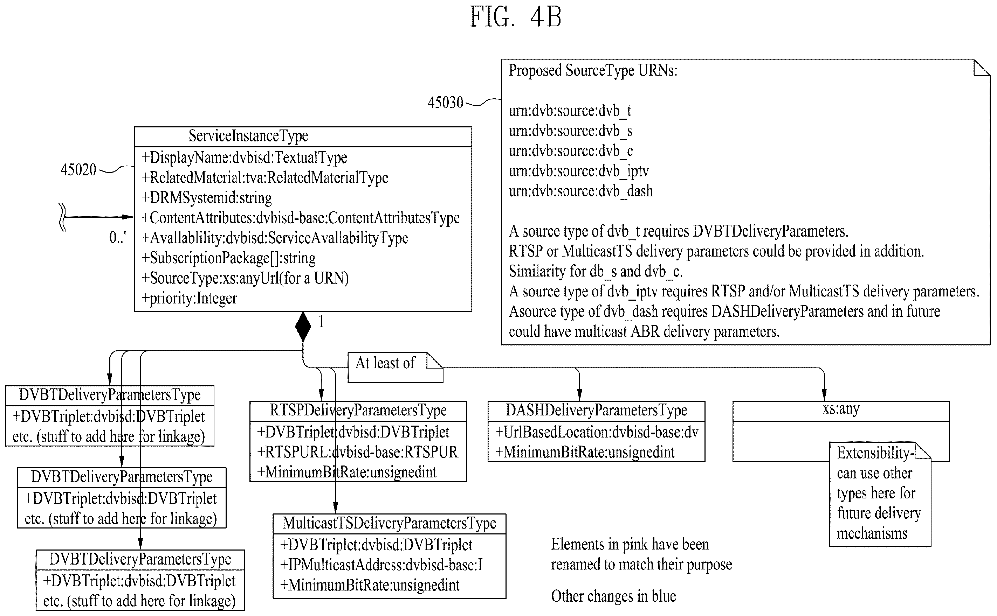

FIGS. 4A and 4B show a service list hierarchy according to embodiments.

FIG. 4 shows a service list hierarchy for the service scenario of FIG. 1.

The DVB-I service list may contain respective services, and each service may contain service instances. Multiple service instances may be defined according to each delivery network, and uniqueness may be distinguished according to the URN of source_type.

The DVB service list type 45000 may reference the DVB-I service type 45010 for each service. The DVB-I service type 45010 signals a related material and a guide source. The DVB-I service type 45010 may reference the service instance type 45020 for each service instance. The service instance type 45020 signals a subscription package for the related material and a source type for URN. The service instance type may reference at least one of a delivery parameter type for DVB T/S/C, an RTSP delivery parameter type, a multicast delivery parameter type, or a DASH delivery parameter type.

The proposed source type URNs 45030 provide URNs for DVB T/S/C/IPTV/DASH, etc.

The DVB service list type 45000 references the LCN table list type, and the LCN table list type references the LCN table type. The LCN table type, the DVB service list type 46000, and the DVB-I service type 45010 may reference REGION. Related region information may vary among services.

The elements in FIG. 4 will be described in detail with reference to the figures described below.

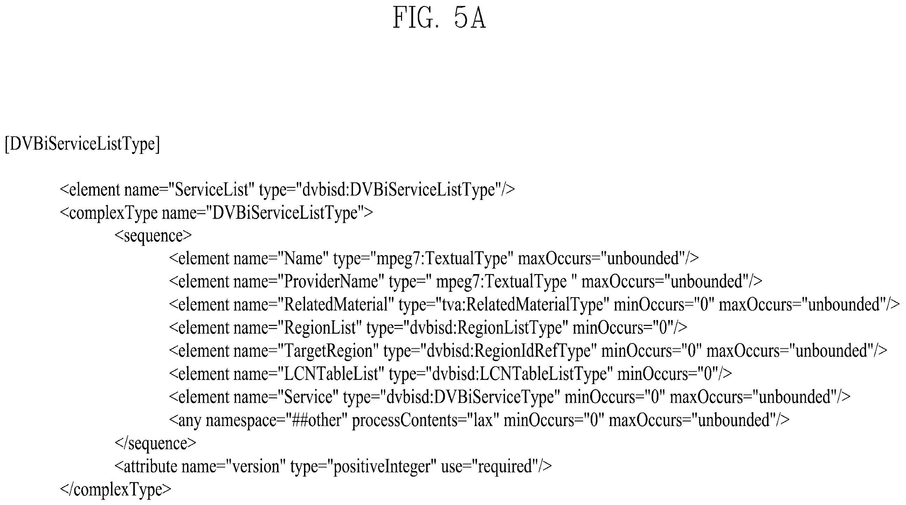

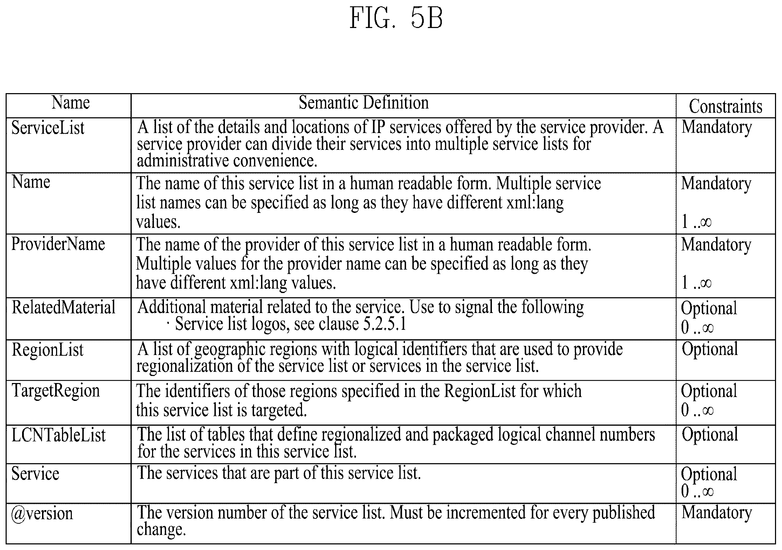

FIGS. 5A and 5B show a DVB-I service list type according to embodiments.

FIG. 5 shows service list information included in FIG. 4.

ServiceList is a list of details and locations of IP services provided by a service provider. Service providers may divide their services into multiple service lists. Thus, this attribute is essential.

Name is the name of a service list in a readable form. Multiple service list names may be expressed in different languages. This attribute is mandatory.

ProviderName is the name of the provider of the readable service list. Multiple values for the provider name may be described in different languages. This attribute is mandatory.

RelatedMaterial indicates an additional material related to the service. This attribute is optional.

RegionList is a list of geographic regions with logical identifiers that are used to provide regional information of services in the service list or the service list. This attribute is optional.

TargetRegion represents the identifiers of the regions specified in the RegionList for which this service list is targeted. This attribute is optional.

LCNTableList is a list of tables that define regionalized and packaged logical channel numbers for the respective services. This attribute is optional.

Service represents services that are part of the service list. This attribute is optional.

@version is the version number of the service list. The value is incremented for every published change. This attribute is mandatory.

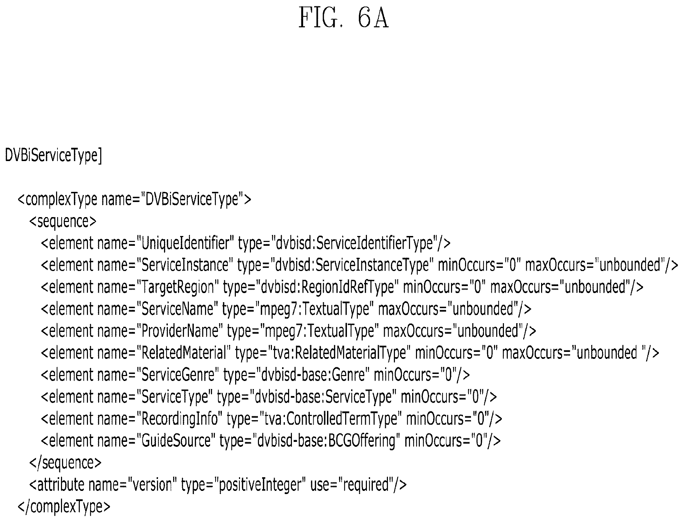

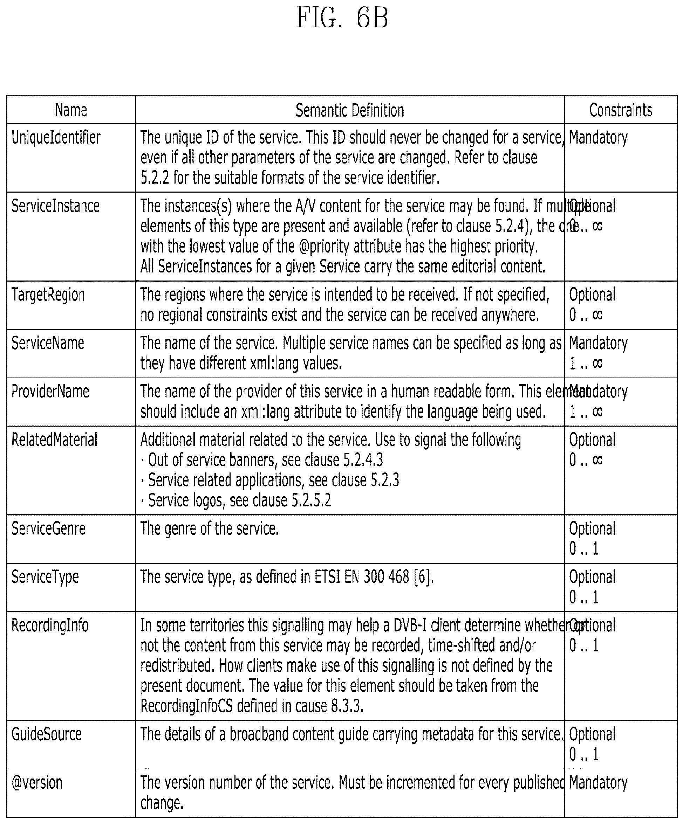

FIGS. 6A and 6B show a DVB-I service type according to embodiments.

The DVB-I service types in FIG. 6 describe the above-described service types in the form of a table.

UniqueIdentifier is the unique ID of the service. This ID may never be changed for a service. Other parameters of this service may be changed. This attribute is mandatory.

Service Instance is an instance having A/V content for this service. When multiple elements of the type of this attribute are present and available, the one with a lower value of the @priority attribute may have a higher priority (or vice versa). All service instances for a given service may have the same content. This attribute is optional.

TargetRegion is the regions where the service is received. When not specified, no region constraints exist. This attribute is optional.

ServiceName is the name of the service. Service names may be specified in various languages. This attribute is mandatory.

ProviderName is the readable provider name of this service. This element may be specified in various languages and is mandatory.

RelatedMaterial is an additional material related to the service. The material may include, for example, out of service banners, service related applications, and service logos. This attribute is optional.

ServiceGenre is the genre of the service. ServiceGenre is optional.

ServiceType is the type of service (refer to the description in ETSI EN 300 468). ServiceType is optional.

RecordingInfo is information allow a DVB-I client to determine whether or not the content from this service is recorded, time-shifted, or redistributed. RecordingInfo is optional.

GuideSource is the details of a broadband content guide carrying metadata for this service. GuideSource is optional.

@version is the version number of this service. It is incremented for every published change. @version is mandatory.

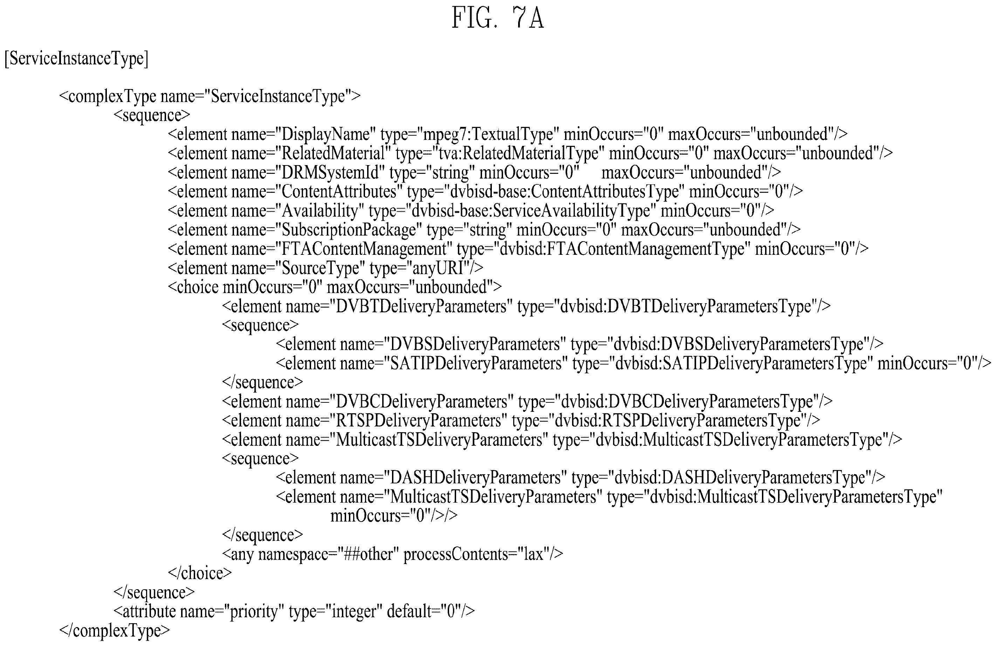

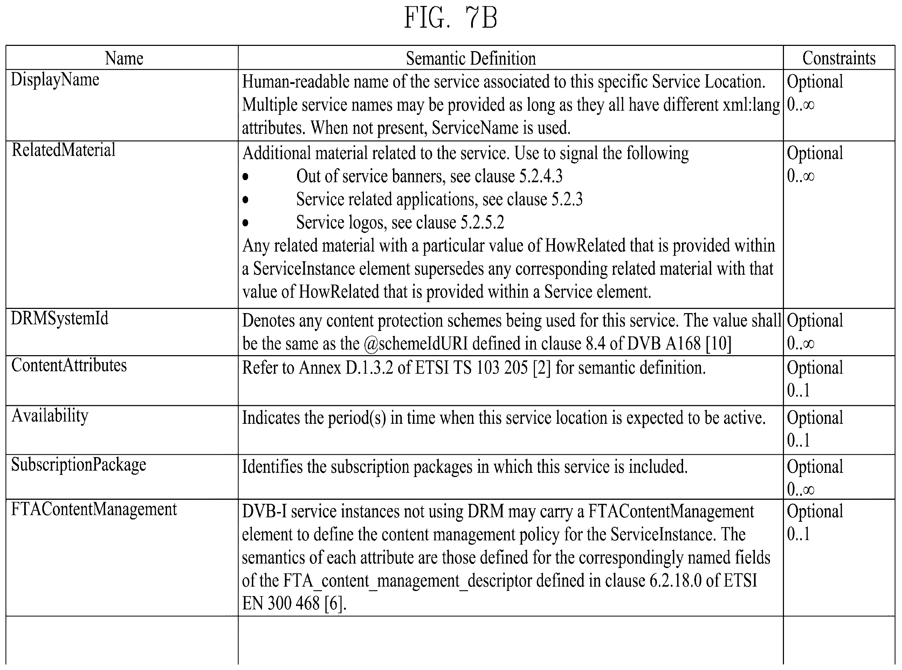

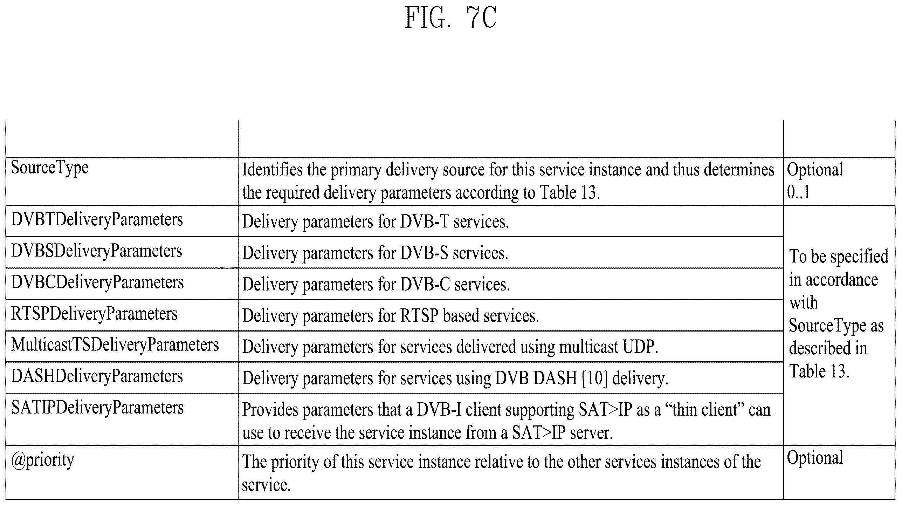

FIGS. 7A, 7B, and 7C show a service instance type according to embodiments.

Elements of a service instance type will be described with reference to FIG. 7.

DisplayName is a readable name of the service associated with a specific service location. Multiple service names may be specified in various languages. When not present, the ServiceName field may be used. This attribute is optional. In the present disclosure, an attribute may correspond to an element, a field, information, or a value according to a level, and may be referred to by various terms.

RelatedMaterial is an additional material related to the service. Specifically, it may include a no-service banner, service related applications, service logos, and the like. A related material with a specific value of the attribute HowRelated, which is provided within a ServiceInstance element, supercedes any corresponding related material with the value of HowRelated provided within a Service element. This element is optional. Alternatively, a property corresponding to @href sting may be acquired from HowRelated.

DRMSystemId indicates any content projection schemes used for the service. The value may be the same as the @schemeIdURI defined in document DVB A168. This value is optional.

Refer to Annex D.1.3.2 of ETSI TS 103 205 for ContentAttributes, whose value is optional.

Availability indicates the period in time when this service location is expected to be active. This value is optional.

SubscriptionPackage specifies a subscription package in which this service is included. This value is optional.

FTAContentManagement: DVB-I service instances that do not use DRM may carry an FTAContentManagement element to define the content management policy for the ServiceInstance. The semantics of each attribute may be specified in the corresponding fields of FTA_content_management_descriptor, which is a descriptor in document ETSI EN 300 468. This value is optional.

SourceType identifies the primary delivery source for this service instance. SourceType determines the required delivery parameters. This value is optional.

DVBTDeliveryParameters provides delivery parameters for DVB-T serviceS.

DVBSDeliveryParameters provides delivery parameters for DVB-S services.

DVBCDeliveryParameters provides delivery parameters for DVB-C services.

RTSPDeliveryParameters provides delivery parameters for RTSP-based services.

MulticastTSDeliveryParameters provides delivery parameters for services delivered using multicast UDP.

DASHDeliveryParameters() provides delivery parameters for services using DVB DASH delivery.

SATIPDeliveryParameters provides parameters that a DVB-I client supporting SATIP may use to receive a service instance from an SATIP server.

The above-mentioned parameters may be described according to the SourceType.

@priority indicates the priority of this service instance relative to the other service instances of the service. This value is optional.

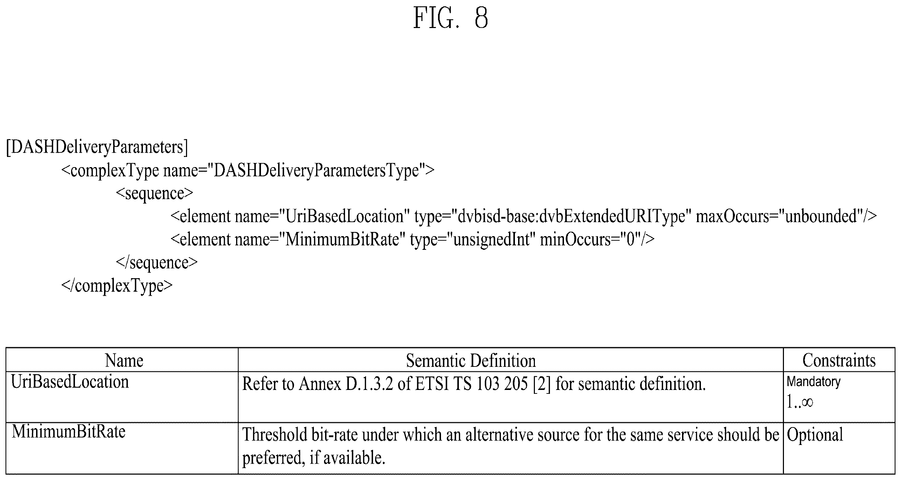

FIG. 8 shows DASH delivery parameters for simulcast according to embodiments.

UriBasedLocation: Refer to Annex D.1.3.2 of ETSI TS 103 205 [2] for semantic definition.

MinimumBitRate: Threshold bit-rate under which an alternative source for the same service should be preferred, if available.

This figure shows DASH delivery parameters for simulcast according to embodiments in a table.

The figure shows the detailed syntax of the above-described DASH delivery parameters.

DASHDeliveryParameters according to the embodiments may be additionally extended for simulcast.

Refer to Annex D.1.3.2 of document ETSI TS 103 205 for UriBasedLocation, which is mandatory. When the DASH service is simulcast, this value may provide location information based on the URI.

MinimumBitRate indicates a threshold bit-rate under which an alternative service for the same service should be preferred. This value is optional.

As a child element of the DVB-I service type, a service interface may be provided according to the delivery network. A client may consider each @priority and device capability and the reception device may determine a service instance.

Here, @minimumBitrate indicates throughput in terms of a network stack for receiving a stream within a service instance.

For example, @minimumBitrate according to the embodiments may indicate throughput in terms of a network stack for receiving a stream within a service instance. That is, the device according to the embodiments may check the minimum bit rate information for the minimum bit-rate at which the network may currently receive the DASH service.

Based on the information, it may be determined whether the service instance is playable. However, in the case of the currently defined information, when multiple service instances are contained in DVBiservicetype, it is difficult for the client to select a service instance based only on the information of @minimumBitrate.

For example, since the minimumbitrate for determining playability is a minimum condition, the fallback condition between bitstreams may not be satisfied by satisfying the minimum condition alone.

For example, it is assumed that there are two service instances as follows.
(Service instance 1) DVB-T delivery method, HD, H.264/AVC
(Service instance 2) DVB-I DASH delivery method, MinimumBitRate 1.5 Mbps

For example, in the case where there are two service instances (e.g., service instance 1 and service instance 2), a client related to the transmission/reception device according to the embodiments is an HEVC UHD capable terminal, and the network situation above the bit rate of the other comparison target may be ensured, the receiver (terminal) should request service instance 2 (e.g., HEVC UHD). However, unless the MPD is received through a request, the receiver cannot know, from the current information, an attribute indicating that a stream of better quality than instance 1 is included. Receiving and comparing all MPDs of all service instances may not only be a burden from the perspective of the receiver, but also may be an issue in rational network selection. A scheme for providing a better service between instances within DVB service scheme information is proposed below. That is, embodiments may be implemented in which the burden of the receiver parsing/analyzing all MPDs or similar signaling information is eliminated and the receiver is allowed to quickly identify and request a better service instance in response to a network situation of a specific bit rate or higher.

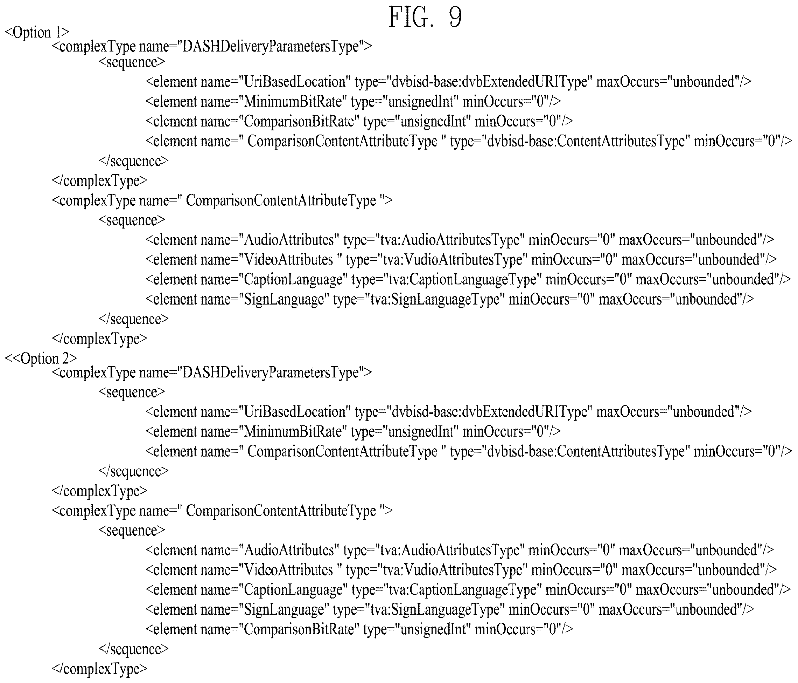

FIG. 9 shows a scheme for selecting a service instance based on DASHDeliveryParametersType according to embodiments.

The DASH DeliveryParametersType may include ComparisonBitRate and ComparisonContentAttributeType. The ComparisonContentAttributeType may include an AudioAttributes element, a VideoAttributes element, a CaptionLanguage element, and a SignLanguage element.

The ComparisonContentAttributeType may correspond to the ContentAttributes element included in the ServiceInstanceType 45020.

The DASHDeliveryParametersType may include ComparisonContentAttributeType. In addition, the ComparisonContentAttributeType may include AudioAttribute, VideoAttributes, CaptionLanguage, SignLanguage, and ComparisonBitRate as elements.

ComparisonBitRate and ComparisonContentAttributeType, which are common elements in Options 1 and 2, may be defined as follows.

@ComparisonBitrate indicates a bitrate for handling a specific IP delivery service instance that provides a better user experience than a non-IP delivery service instance available for this service.

@ComparisonContentAttributeType indicates which video characteristic is available for the DVB-I client to provide a better user experience than the non-IP delivery service instances available for this service.

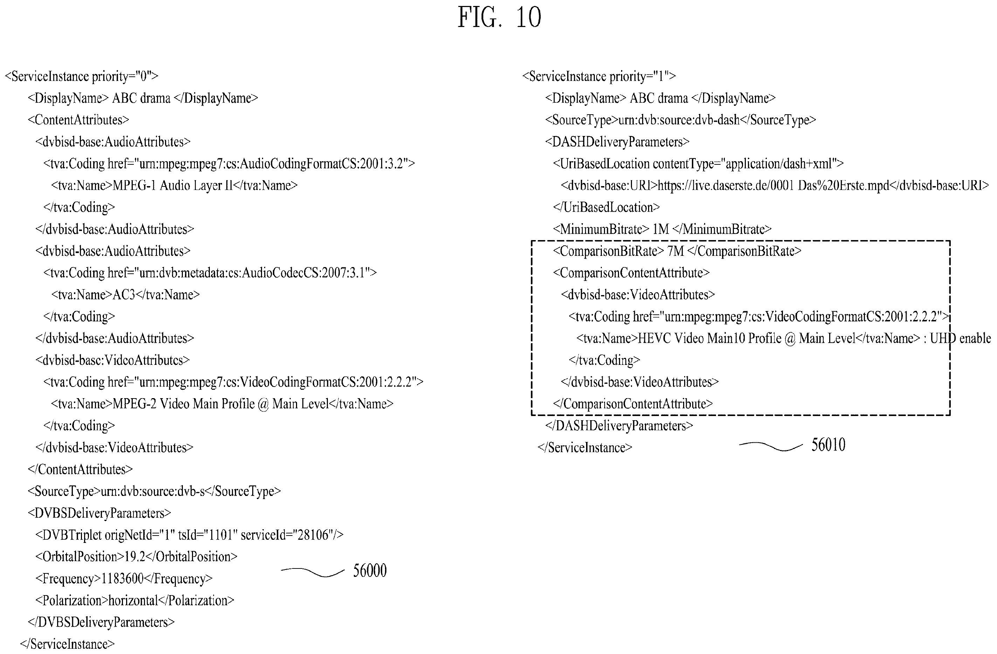

FIG. 10 shows an example of a DVB-I service instance according to embodiments.

The figure shows two service instances: the first one is DVB-S ServiceInstance and the second one is DVB-I ServiceInstance.

The first service instance has priority 0, and the display name is ABC drama. AudioAttributes, VideoAttributes, and the like are signaled as attributes, and the ServiceInstance includes DVBSDeliveryParameters. Here, the priority '0' may be an example value. In addition, the reception device according to the embodiments may check an additional service instance in addition to the service instance to provide, through signaling information according to embodiments, a service instance capable of providing a better service to the user in consideration of not only the priority value, but also the network status or available bandwidth and capabilities of the client.

The second service instance has priority 1, and the display name is ABC drama. DASHDeliveryParameters may signal the address of https://live.daserste.de/0001 Das%20Erste.mpd</dvbisd-base:URI for content of the application/dash+xml type through a URI-based location. The MinimumBitRate is 1M, and the ComparisonBitRate is 7M. The ComparisonContentAttribute signals VideoAttributes through "um:mpeg:mpeg7:cs:VideoCodingFormatCS:2001:2.2.2" and HEVC Video Main10 Profile @ Main Level</tva:Name> (UHD enable). Specifically, the value of the ComparisonBitRate may be an example value. The reception device (terminal, client, etc.) according to the embodiments checks the value of ComparisonBitRate, and recognize, from the value, that a better service is provided. For example, when a better service corresponding to the value of 7M is provided, the method/device according to the embodiments may additionally define corresponding video attribute information like the ComparisonContentAttribute of FIG. 55. Accordingly, the reception device according to the embodiments may check the presence of the UHD stream and switch the stream to a service for the ComparisonContentAttribute according to the network situation.

When the receiver receives two instances within the same service (e.g., ABC drama) in the DVB-I service scheme, the DVB-I client should select an instance that may be provided for a better user experience. When the value of @ComparisonBitrate value is identified as 7 Mbps, the available bandwidth of the current network is exceeded compared to HD, and the attribute of @ComparisonContentAttribute is supportable by the terminal (receiver), an MPD may be requested and a better service may be received and provided to the user. The attribute indicates "beyond HD" based on @ComparisonBitrate (7Mbps - HD), and means that a service that is enriched compared to the broadcast service instance may be provided.

Here, the bit rates of 1M BPS and 7M BPS may be example values. These values may be bit rates applied between services with different resolutions, such as UD and UHD.

According to embodiments, a use case is expanded as follows.
Instance 1. HD broadcast
Instance 2. UHD DASH with representations from SD to UHD, 1.5 Mbps to 33 Mbps (with an HD Representation at 7 Mbps). MinimumBitRate 1.5 Mbps; ComparisonBitRate 7 Mbps.

That is, Instance 1 indicates HD broadcast, and Instance 2 indicates UHD DASH. Instance 2 may be represented from SD to UHD and may have a bandwidth from 1.5 Mbp to 33 Mbps. In this case, the HD representation is 7 Mbps, the minimum bit rate is 1.5 Mbps, and the comparison bit rate is 7 Mbps.

A player capable of supporting UHD according to the embodiments may select Instance 2 when the bit rate is 7 Mbps.

A player capable of supporting HD without HEVC support according to embodiments selects Instance 1.

A player capable of supporting UHD and having a Wi-Fi link of 5.5 Mpbs speed according to embodiments selects Instance 1.

A player capable of supporting UHD and having a 3G mobile connection of 1 Mbps, at which a broadcast report cannot be received, according to embodiments may not have a connection fast enough to play a service, but may attempt to play the service.

A player capable of supporting UHD and having a 4G mobile connection of 2 Mbps, at which broadcast cannot be received, according to embodiments may select Instance 2.

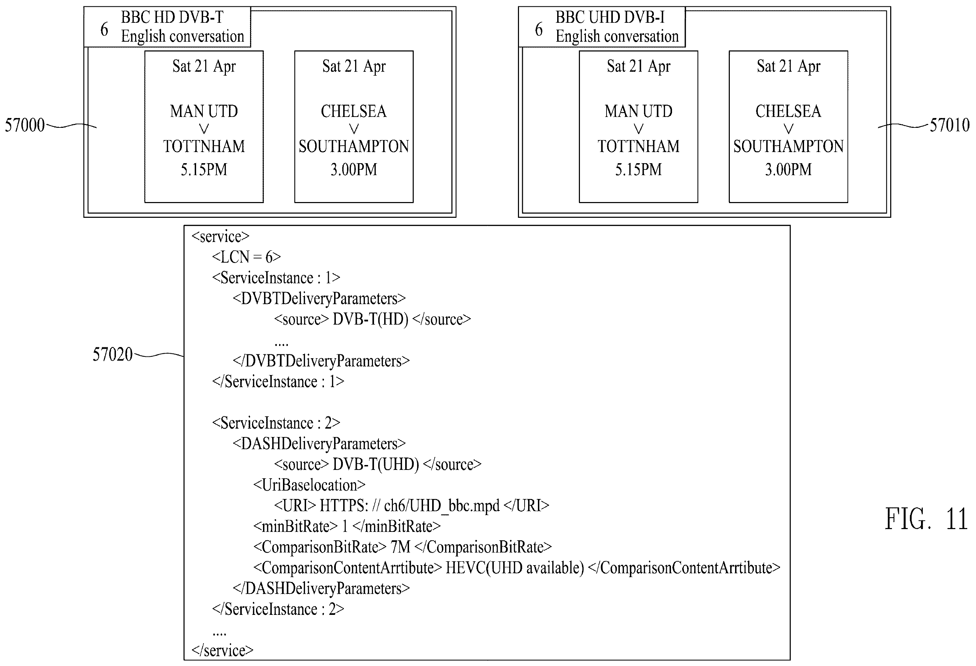

FIG. 11 illustrates a simulcast UI/UX according to embodiments.

In the figure, part 57000 illustrates a state in which the reception device according to the embodiments displays the DVB-T broadcast service, and part 57010 illustrates a state in which the reception device according to the embodiments displays the DVB-I service. FIG. 11 illustrates that a better user experience for the same service is provided to a user according to a user's selection and/or a characteristic of the reception device, based on a signaling scheme and a UI/UX scheme according to embodiments.

Part 57020 is an example of the above-described signaling information for the aforementioned states. The example corresponds to the service list described above.

The service list according to the embodiments may provide a service instance for each service. The service for parts 57000 and 57010 has logical channel number 6, and includes service instance 1 and service instance 2. Service instance 1 signals DVB-T (HD) service as shown in part 57000, and service instance 2 signals DVB-I (UHD) service as shown in part 57010.

According to embodiments, when a device capable of receiving the DVB-I service receives one or more service instances, a determination may be made such that a media service of higher quality may be provided based on the comparison bit rate value and the comparison content attribute value included. When two service instances are received as in the embodiment, a service instance that is likely to receive a better service may be quickly identified through IP/DASH. As in the embodiment, when HD and UHD are simultaneously received, a delivery type may be selected through the information.

In other words, a reception device receiving Service Instance 1 and Service Instance 2 may immediately check a better DVB-I UHD service based on the comparison bit rate value and the comparison content attribute value included in the service instance for DVB-I, without having to parse all other signaling information for all services. Based on Instance 2, the reception device may recognize through the comparison content attribute that the comparison bit rate is 7 Mbps and the resolution of the better service is UHD (HEVC). The reception device may ask the user whether to view the better service based on UI/UX. The service according to Instance 2 may be provided to the user according to the user's selection or the setting of the reception device.

The reception device according to embodiments may provide a DVB-I simulcast service UI/UX to a user. The UI/UX shown in FIG. 57 represent a UI/UX that provides a better experience to a user when a DVB-I client receives multiple service instances through the extended information according to the above-described embodiments. For a terminal capable of supporting UHD/HEVC, a DVB-I service instance capable of receiving UHD may be selected in place of the DVB-T service instance capable of receiving HD. The terminal may select a service instance of high quality only through the service list scheme without having to receive all DASH MPDs.

The signaling information according to the above-described embodiments may be referred to as various terms such as field, attribute, element, first information, second information, first value, and second value.

The above-described embodiments and the embodiments to be described below may provide the following effects.

According to embodiments, an MPEG-2 system/DVB SI-based service for Internet channel scanning for providing the same user UX as the existing linear service channel may be initialized.

According to embodiments, network/stream/service unique signaling for Internet stream identification may be performed for aggregation with an existing linear channel.

According to embodiments, a method for replacing TSID in existing system information may be extended.

According to embodiments, switching of a DVB network provided on the same dedicated channel and each bitstream provided on a DVB-I channel may be allowed.

According to embodiments, SUHD (8k) linkage may be provided through a DVB-I channel in SD, HD, and UHD linkage services provided on an existing channel.

According to embodiments, a DVB-I service list may be acquired over the existing DVB network.

According to embodiments, in order to provide a linear IP-based TV service, a service bootstrap technology of the existing linear channel network.

According to embodiments, unique information that must be defined for Linear IP based TV service identification may be added.

According to embodiments, an IP based TV channel may be added to the existing linear channel EPG.

According to embodiments, an existing DVB stream and a DVB-I stream may be simultaneously provided on the same dedicated channel, and the streams may be dynamically changed for a predetermined period.

According to embodiments, SUHD (8k) linkage may be provided through a DVB-I channel in SD, HD, and UHD linkage services provided on an existing channel.

According to embodiments, linkage information for acquiring a DVB-I service list or a query end point over the existing DVB network may be extended.

According to embodiments, a service bootstrap scheme for an existing linear channel network may be extended to provide a linear IP based TV service.

According to embodiments, linkage between the existing DVB network and the DVB-I network may be provided at the bouquet level, service level, and event level based on DVB-SI information.

According to embodiments, content of various resolutions may be provided on the same logical channel through linkage information about the existing DVB network and the DVB-I network.

According to embodiments, a DVB-I service list location and a query may be defined through a linkage descriptor (uri_linkage_descriptor) to acquire a DVB-I service list on the existing DVB network.

According to embodiments, an open DVB-I service registry may be accessed through an end point and a service list entry list suitable for a client may be acquired.

According to embodiments, a service that is accessed by a device supporting an RF-based DVB tuner through a UI in which an existing linear service and an OTT service are aggregated may be enabled.

According to embodiments, a media service that provides the same UX as existing linear channels may be provided through the open Internet without a set-top box (STB).

According to embodiments, as the existing DVB network and the Internet channel are aggregated, a resolution that may be provided on the same channel may be extended.

According to embodiments, a DVB-I service list location may be signaled due to a linkage descriptor (uri_linkage_descriptor). The reception device according to the embodiments may efficiently acquire a DVB-I service list. In addition, due to the end point according to the embodiments, the reception device according to the embodiments may efficiently acquire a service list.

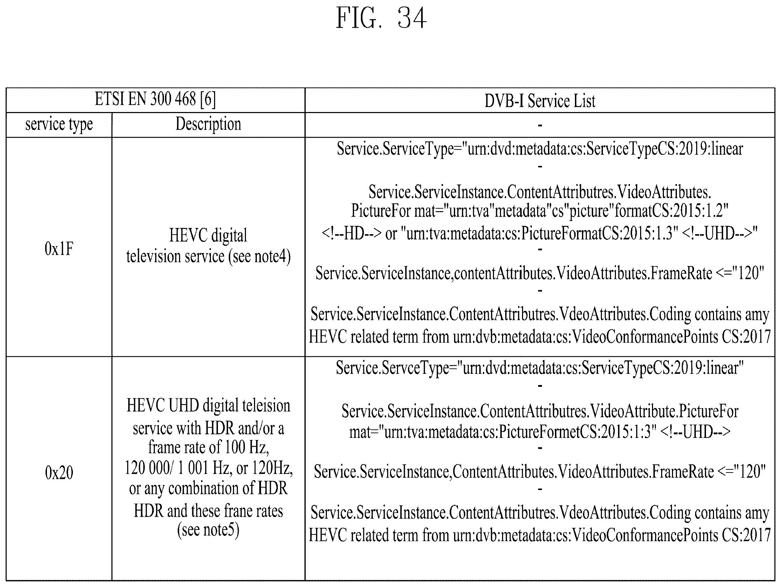

Due to the above-described embodiments, the terminal (device) according to the embodiments may acquire a service list in which all channels are aggregated, as shown in FIG. 34. The aggregated service list may include an entire list, a list desired by the reception device, and the like.

A URI by which all services may be acquired may be present. Through this URI, a URI for a list of individual services may be additionally acquired. The individual list may be a list of services for each broadcaster.

As the service platform expands, operators may provide services through more diverse environments. From the user perspective, media services received in various app environments may be offered in an aggregated reception environment called DVB-I. Accordingly, services that are more convenient and have good accessibility may be received.

With the expansion and integration of the service platform, a service may be simulcasted over communication networks including terrestrial, cable, satellite, and 5G networks, and the receiver may receive a desired service according to the receiver capability.

This process may be implemented through ComparisonBitrate and/or ComparisonContentAttribute.

The MPD may contain multiple representations and also contain both UD related information and UHD related information.

The reception device has a large burden of parsing all the information of the MPD, which takes a lot of time.

On the other hand, when the DVB-I service list at the service instance level is used, the reception device may be allowed to selectively and quickly decode optimized services and rich media according to the capabilities of the reception device.

The reception device may recognize presence of services with different capabilities through ComparisonBitrate. ComparisonBitrate may be a concept of minimum throughput. Furthermore, the reception device may recognize a specific attribute of a switched service through ComparisonContentAttribute.

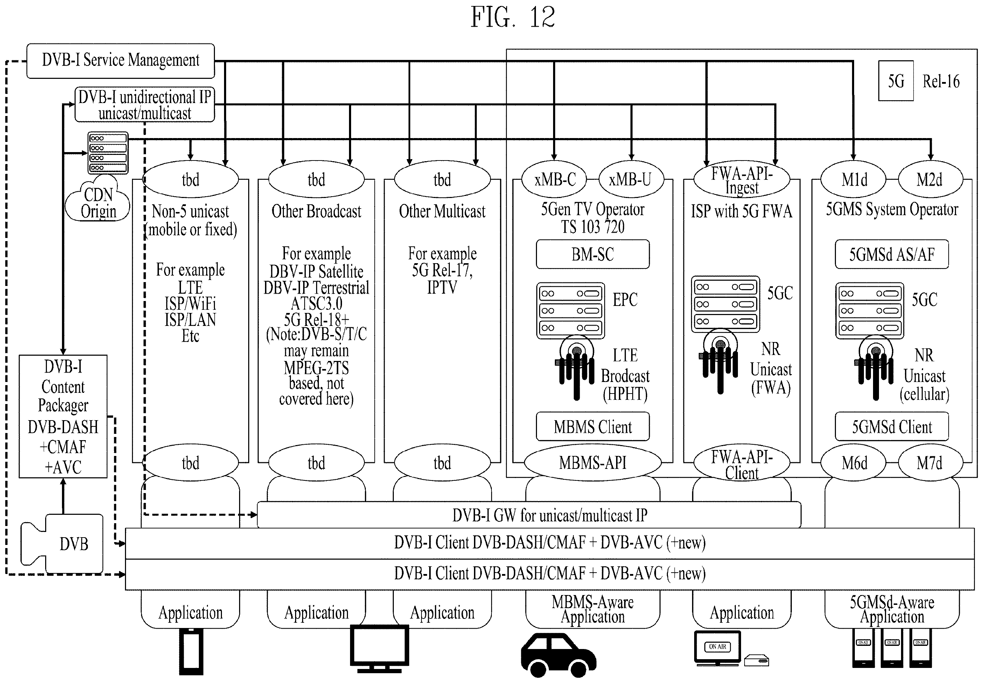

FIG. 12 shows a 5G-based DVB-I system according to embodiments.

### Communication network-based DVB-I (DVB-I over 5G)

The standard of DVB-I over 5G is intended to create a standard technology allowing media services to be consumed anytime, anywhere by accessing the 5G network as well as the universal Internet network through the convergence of 3GPP TS 103 720 standard Rel-16 version-based media transmission technology and DVB-I media services. In conventional cases, media services have been consumed through existing web browsers based on universal Internet networks such as LTE, OTT, and LAN, independent applications, or manufacturer middleware applications. In this regard, the recently released standard technology for media transmission of 3GPP Rel-16 version and DVB-I and a unified service integrating standard associated of European service providers have opened wider service availability than existing services by establishing a meaningful service protocol.

The media data processing method according to the embodiments may include an integrated DVB-I solution enabling accessibility of multiple distributions even through the existing non-5G network as well as HPHT/Broadcast and LPLT/unicast.

### DVB-I over 5G Media Streaming Service Requirements

The DVB-I over 5G structure according to the embodiments should provide a smooth and continuous service in a delivery route supported by multiple distributions, and may provide a service through an efficient and flexible connection according to an optimal network environment. Specific requirements are described below.

5GBC, 5GMS, and non-5G networks (universal Internet supporting OTT such as LTE and Wi-Fi) should be included in the DVB-I service scheme in the form of a service instance.

For 5GBC, 5GMS, and OTT, which are extended service instances, parameters of each network should be included for identification of the network. For example, proper alignment between service instances should be provided, such that switching between service instances delivered over different networks, such as frequency, 5GBC transmission/service identifier, 5GMS transmission/service identifier, and DVB triplet, may be recognized as reasonably smooth.

When degradation in signal quality or network handover occurs during play-out, the instance may be switched to another service instance. Also, such a switch should be reasonable, and a specific reference point should be provided regarding the degradation in signal quality.

Service priority may be allocated to service instances according to the intention of the service provider.

A related support use case is described below.

A user purchases a smartphone supporting the 5G network and installs a DVB-I app or executes a native app (including a fixed TV) of a specific manufacturer's middleware.

A terminal may support 5GBC, 5GMS, and OTT. When the bitrate is is higher than or equal to the minimum supported bitrate, a service instance may be selected according to the network, or the terminal may automatically perform determination and perform reasonable switching.

When the DVB-I app is executed, the DVB-I client may provide and select an accessible service instance through UI/UX.

For example, a popular program with high traffic may connect to 5GBC.

During 5GBC service, when the terminal is moving outside or enters a shaded area, it may be connected to 5GMS.

5GBC may be selected first in the case of fixed TV, and OTT may be selected first in the case of portable devices. 5GMS may be selected as the next best. According to the reception environment and characteristics of the terminal, the priorities of the service instances may be switched rationally and flexibly.

When the bitrate decreases below a certain bitrate, and thus the service quality is degraded in the current service instance, the current service instance may be switched to another service instance according to a specific condition.

In the case of UHD support content, the service instance may be switched to a service instance with the best condition according to the bitrate of the effective network.

The access priority of 5G aware App may be designated according to the terminal manufacturer and service provider and specific business logic.

According to the above use case and requirements, the following issues arise in terms of implementation in the current DVB-I standard.

### [Potential issue]

There is no issue regarding service continuity and synchronization because media data is received only through Restful API in the designated location specified by the service app regardless of the existing network connection type.

In the case of DVB-I for 5G, the bootstrapping method and location of operators may depend on the type of the network.

The propagation delay delivered varies according to the network characteristics. Accordingly, in the case of a linear service, the reference time and media characteristics may also be provided in a different environment for each network.

Discovery URL and media location URL are all differ among operators, and there is an issue that it is difficult to completely switch between these media.

There are no clear criteria for determining that switching is needed or signal quality is degraded within the network.

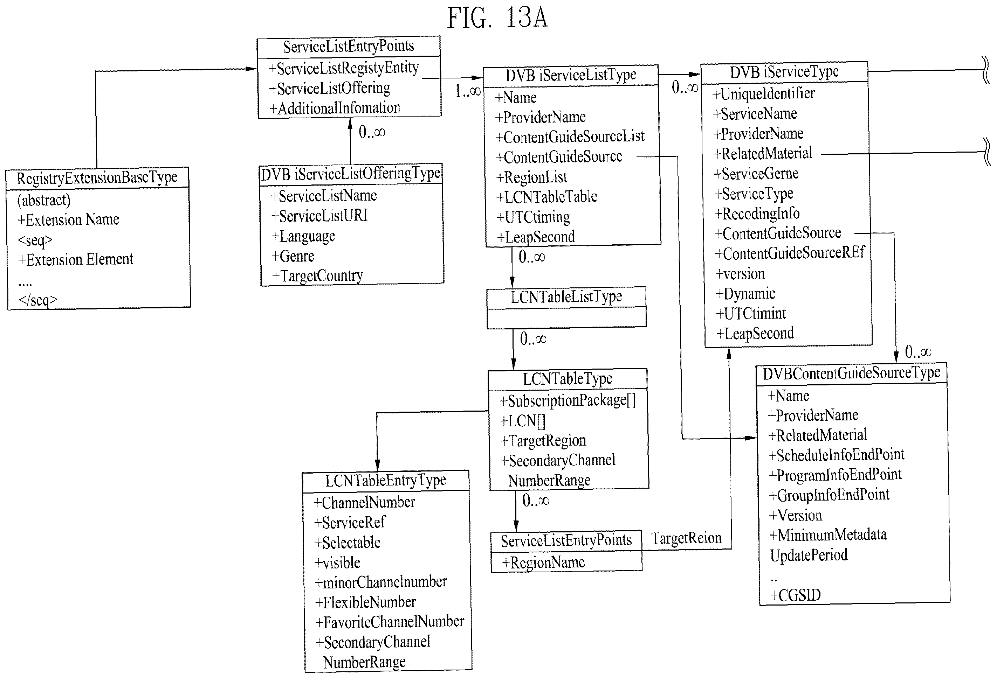

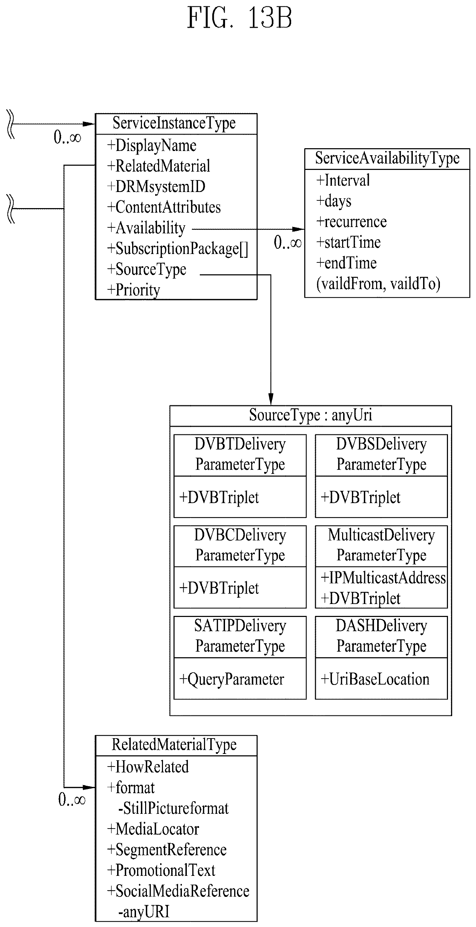

FIGS. 13A and 3B show a DVB-I service scheme extension according to embodiments.

Embodiments and solutions for supporting DVB-I service instance switching

### [Time alignment]

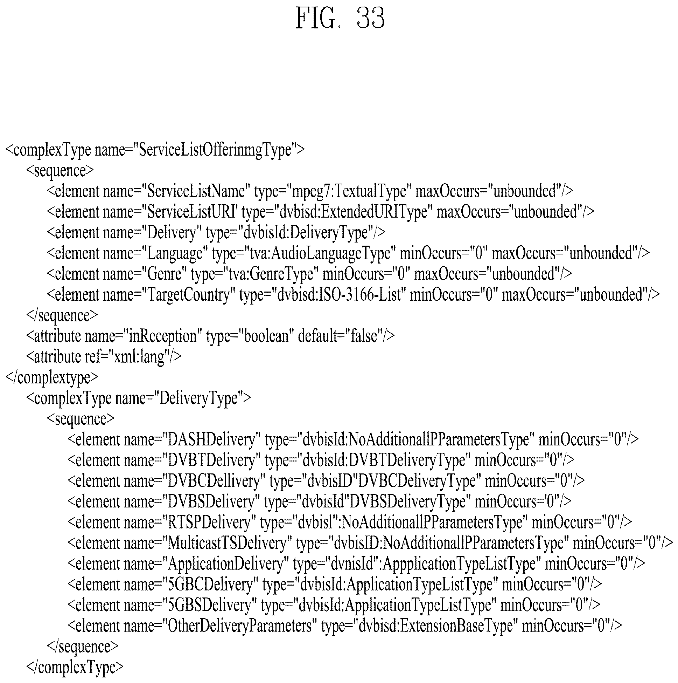

In order to address the above issues, a common reference time may be obtained and the misaligned reference time may be aligned between service instances. Although there is a method of acquiring the reference time at the level of each service instance, there is also a method for time alignment between the service instances by acquiring the reference time at the service level of the upper layer defining the service instances. As shown in FIG. 33, by adding a method of acquiring UTC in DVBiServiceType or DVBiServiceListType, the DVB-I client may compensate for the reference clock value to align the time.

A specific syntax location and type value may be defined as follows. For specific semantics, refer to the above-mentioned common details.

The method/device (DVB client, terminal, etc.) according to the embodiments may transmit/receive media data based on the DVB-I service scheme extension of FIG. 33.

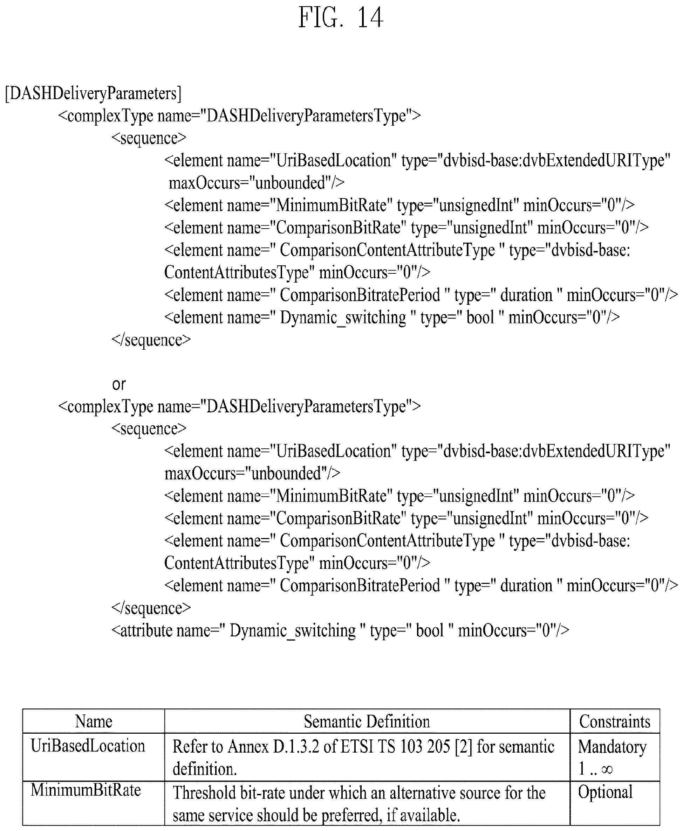

FIG. 14 shows information for service instance switching according to embodiments.

@ComparisonBitrate: A bitrate for handling a specific IP forwarding service instance that provides a better user experience than service instances available for this service.

@ComparisonContentAttributeType: indicates the video and audio characteristics available for the DVB-I client to provide AV characteristic comparison and better user experience than service instances available for this service

@ComparisonBitratePeriod: A condition for checking whether the comparison between service instances is valid in order to provide better UX to users.

@ComparisonBitRate, @ComparisonContentAttributeType, @ComparisonBitratePeriod: The three elements/attributes may be used as reference values for each device and may be used according to each device's own conditions. However, backward compatibility should be supported for the condition for service instance switching of the DVB-I phase 1 receiver, and no user inconvenience should be caused.

@Dynamic_switching: A flag for enabling switching between service instances to provide a better UX to users.

The method/device according to the embodiments supports all networks such as T/S/C + Internet channel (DVB-I) + 5G, and efficient switching between networks may be performed. In addition, the DVB-I client may receive actual media data and DVB-I service scheme information over all networks according to the embodiments. Specifically, starting with a single service definition (unique ID), a single service may be defined as a local service and a service instance according to a delivery method. In serviceType, multiple serviceinstanceType may be defined, and this service may be the same as one.

FIG. 15 shows an example of service instance switching according to embodiments.

Referring to FIG. 15, connection may be switched from OTT to 5GBC based on certain conditions according to the use case describing that "f) 5GBC may be given the highest priority in the case of fixed TV, and OTT may be given the highest priority, and 5GMS may be selected as the next best; According to the reception environment and characteristics of the terminal, the priorities of the service instances may be switched rationally and flexibly," or that "d) For example, a popular program with high traffic may connect to 5GBC." If the average reception bitrate of OTT maintains low video quality for a certain duration, service instance switching should be considered. In this case, the switching use case of the service instance may be implemented by comparing the reception environments of the terminal. When the reception environments are compared, there should be a comparison value for deterioration in quality. Service instances are compared in terms of the bitrate and video attribute through @ComparisonBitRate and @ComparisonContentAttributeType according to the embodiments to determine whether the condition for service instance switching is satisfied. For example, when the currently reception bitrate exceeds @ComparisonBitratePeriod for a certain period of time in the range of MinimumBitrate to ComparisonBitRate, it may be determined that the condition for switching is satisfied.

In this regard, when dynamic switching of a corresponding instance is allowed in the DVB-I client connected according to the existing priority according to the DVB-I phase 1 standard, an issue related to the existing terminal may arise. For example, the video with the lowest bitrate may also be defined in MPD for seamless DASH representation, and therefore there is no scenario in which service instances are switched even if the reception bitrate is lowered. Therefore, before checking the conditions of @ComparisonBitRate, @ComparisonContentAttributeType, and @ComparisonBitratePeriod with priority as the highest priority, it should be first checked whether dynamic switching between service instances is allowed in order to support the backward compatibility of the DVB-I phase 1 receiver. Accordingly, @Dynamic_switching Bool type needs to be extended.

FIG. 16 shows an example of service instance switching according to embodiments.

In FIG. 16, in the use case describing that "h) In the case of UHD support content, the service instance may be switched to a service instance with the best condition according to the bitrate of the effective network," and the use case describing that "i) The access priority of 5G aware App may be designated according to the terminal manufacturer and service provider and specific business logic," the following conditions may be created.

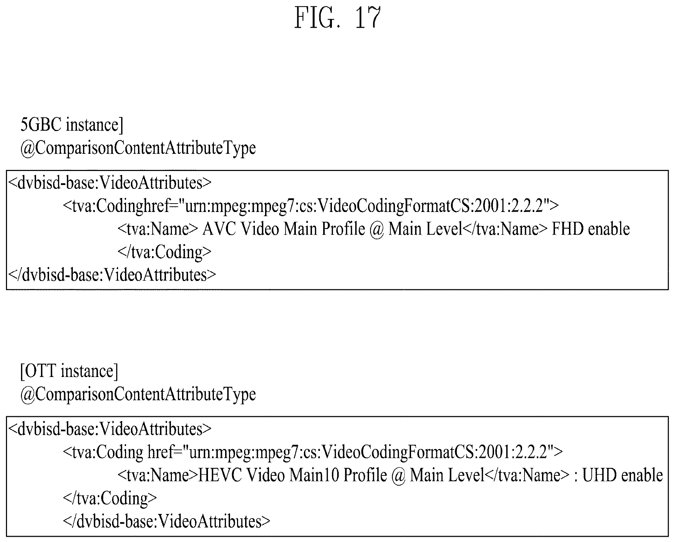

FIG. 17 shows a 5GBC instance and an OTT instance according to embodiments.

In a use case that requires UHD playback support according to a user's selection of UHD content playout or specific business logic, the operation may be switched from 5GBC, which basically supports HD, to OTT. When the extended @ComparisonContentAttributeType is defined as follows, the UHD service may be provided by switching to a service instance of OTT capable of supporting UHD.

According to embodiments, when receiving low-quality media data for a certain duration in OTT, switching to a high-quality 5G network may be performed. For example, 5GBC is free-to-air and may be received without using data. According to the user's intention, reception may be enabled.

In addition, when the range is out of 5GBC coverage, fallback to a network on which data is used may be automatically performed. This may not be what is intended by the user.

Network switching may not be limited to high/low quality, and may support various options. In other words, it is possible to process not only network switching according to the user's intention, but also network switching according to the environment change independent of the user's intention may be handled.

Furthermore, in switching between possible networks, such as SGMS/SGBC/LTE/Wi-Fi/local home media router, the fallback may be performed using a method according to embodiments.

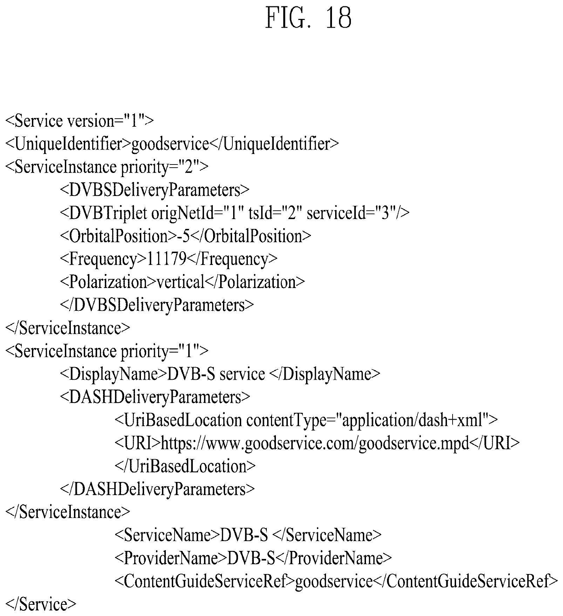

FIG. 18 shows a hybrid service scenario according to embodiments.

The DVB-I client, which is a device according to embodiments, may perform the discovery method according to embodiments for receiving a service list according to the delivery method (DVB-I standard based hybrid service scenario)

In the DVB-I scheme according to embodiments, a broadcaster may transmit a service on an Internet channel and T, S, and C channels simultaneously. The service provider and the device manufacturer capable of receiving a DVB-I service may acquire authentication for a service channel through regulation and provide an Internet channel through an existing linear service and a channel aggregator. A typical use case is shown in FIG. 18.

The Service may provide a DVB-S service through a DASH instance and a DVB-S supporting STB. The DVB-I client may select instance through Priority and may receive the same service through IP or satellite according to the selection.

DVB-I may build a DVB-I hybrid service environment by pre-installing the satellite STB/RF receiver/cable STB, which is installed to support these services, and receiving a DVB-I service list. In the case of DVB-I mobile, the environment is an only-IP environment. Accordingly, a service list may be received and an instance that may be received through IP may be selected.

Using the DVB-I service scheme according to the embodiments, the client may selectively receive a filtered service for the received local services through information such as target region/postcode/region ID/LCN mapping to support regionalization.

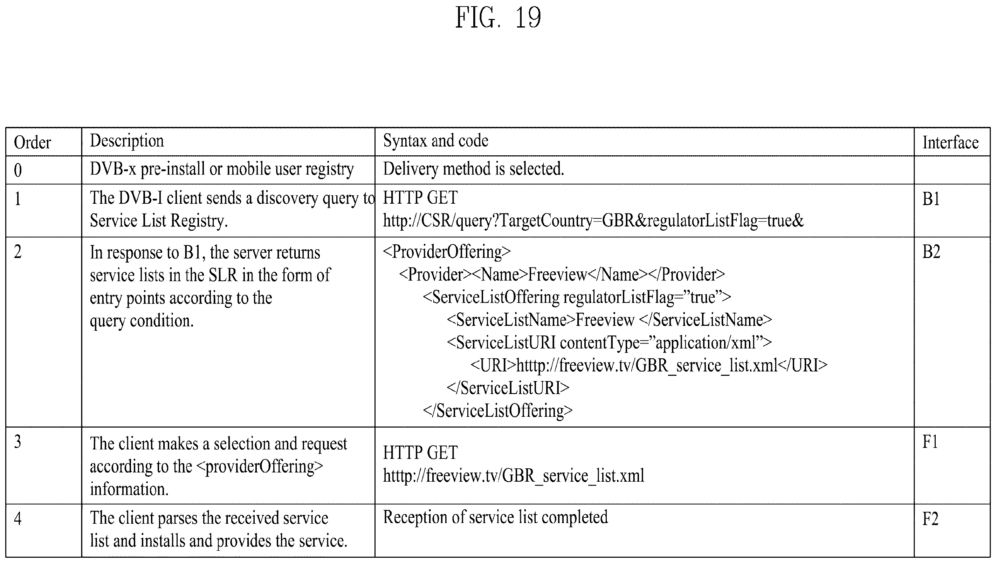

FIG. 19 shows a DVB-I service list discovery procedure according to embodiments.

Interfaces B1 and B2 of FIG. 19 represent the discovery procedure, and interfaces F1 and F2 represent a service list acquisition procedure. Related steps and the embodiment of the current standard are shown in FIG.19.

In this current service scheme structure, the service discovery searches for all service lists in <ProviderOffering>, regardless of the delivery method, and selects and receives a service list according to specific criteria on the client side. In the current scheme, the service list is not classified according to the satellite STB/RF receiver/cable STB through which the list is received. Rather, the service list is received in the absence of a specific criterion. In this structure, there is a risk that the device receiving the satellite STB may receive the terrestrial list. In addition, since the DVB-I client has a load of filtering, it is heavy in terms of limited device capability.

In order to address the above-mentioned issues, the standard may be extended to acquire a list according to the delivery method during the DVB-I service discovery procedure.

Accordingly, the reception device may efficiently receive service entries corresponding to the pre-installed delivery method from the server.

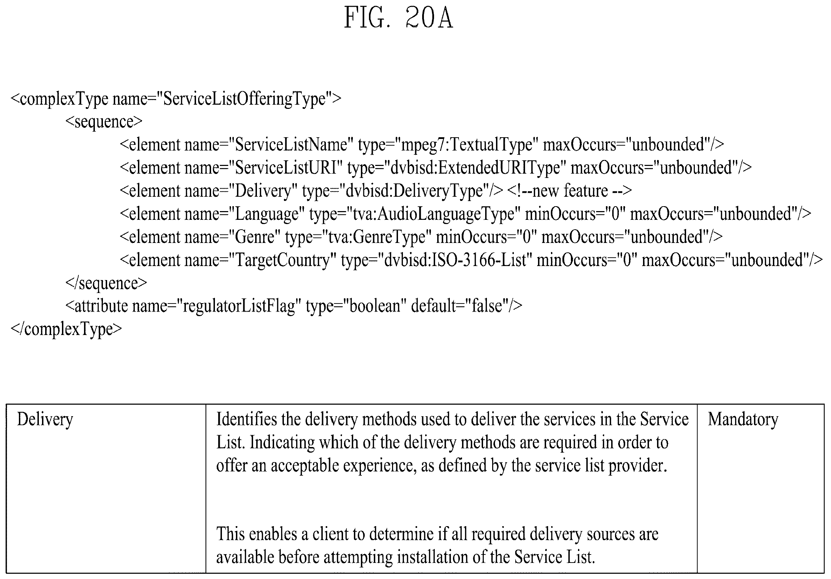

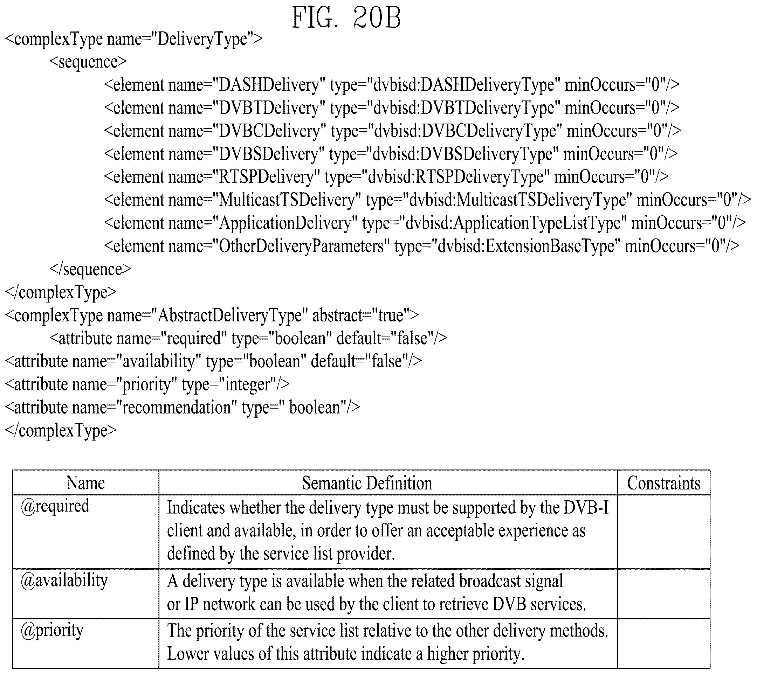

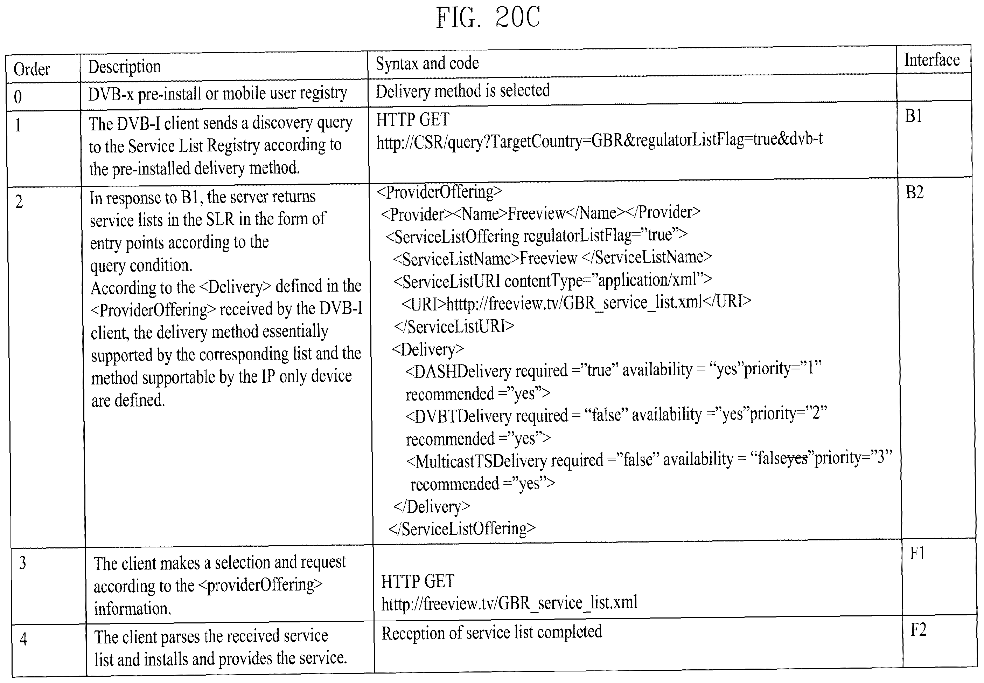

FIGS. 20A, 20B, and 20C illustrate a DVB-I service list acquisition method according to a delivery method in DVB-I discovery according to embodiments.

The method of FIG. 20 may provide the following effects. The DVB-I client may receive all the service lists and shift the load of filtering of a huge amount of data onto the server. In addition, the DVB-I client deliver related information through a query based on the pre-installed reception information (pre-installed delivery method/protocol). The server may receive an appropriate list according to the delivery method through filtering. In addition, in order to support IP-only devices in which DVB network is not pre-installed, the service list may be matched according to the appropriate priority of acceptable experience information defined by the service list.

The service list provider may provision the list according to a combination of various delivery methods, and should provide the user with information that may indicate whether the service provides a hybrid service or an acceptable experience and whether the service is compatible with and displayed on DVB-I clients with various capabilities.

A specific embodiment may be identified in the process of acquiring a service list entry point that matching the request of the DVB-I client. According to the information defined in the delivery method, the DVB-I client may display the function of selecting/displaying a service list.

@required: Indicates whether the delivery provides a hybrid service or an acceptable experience.

This information indicates whether the delivery type must be supported and installed on the DVB-I client in order to offer an acceptable experience, as defined by the service list provider. When the client can use a relevant broadcast signal or IP network to retrieve a DVB service, the corresponding delivery type may be installed. Also, this field may be referred to as @installRequired.

@availability: Indicates whether to display service selection from the user without satisfying the required attribute.

This information indicates whether a corresponding service satisfies a condition for providing a service to the user. According to the indication of the field, the DVB-I client may check whether the information is displayed on the UI/UX.

According to a combination of the two values, sufficient information for selection may be provided to the user and a UI/UX for making a clear selection may be provided to the user.

@required indicates whether the delivery type is supported by the DVB-I client and available in order to offer an acceptable experience as defined by the service provider. The acceptable experience may refer to, for example, a hybrid service.

The delivery type according to the embodiments may include DASH, T, S, C, and 5G. Elements such as DASH delivery type, T delivery type, S delivery type, S delivery type, RTSP delivery type, and multicast TS delivery type may be displayed.

@required has a Boolean type and may have a value of True or False.

@availability indicates whether a delivery type is available and the services in the delivery type is recommendable in UI/UX when the related broadcast signal or IP network can be used by the client to retrieve DVB services.

@availability has a Boolean type and may have a value of True or False.

@priority indicates the priority of the service list relative to the other delivery types. A lower value of this attribute may indicate a higher priority.

For example, referring to FIG. 73, when DASHDelivery required is true and availability is yes (true), they indicate that these service lists and the delivery type of services acquired by these service lists are DASH. The DASH supporting terminal may acquire these service lists and provide a UI/UX related to a service for the service lists. Priority may be 1 and have a higher priority than other service lists. When recommended is "yes", these service lists may be recommended to a terminal. When DVBTDelivery required is false and availability is "yes (true)," they indicate that the delivery types of these service lists and services acquired by these service lists are T. That is, the T supporting terminal may acquire these service lists and provide a UI/UX related to the service. Priority is 2, and recommended is "yes."

A device according to embodiments may have a registry pre-installed on the client. The client may request a discovery query to the service list registry according to a pre-installed delivery method. Based on the interface, in response to the client's request, the server may deliver an endpoint for service lists. Information about whether multicast delivery is required, whether availability is provided, and what priority is assigned may be transmitted to the receiver (client). The client may discover and acquire a service based on the service list.

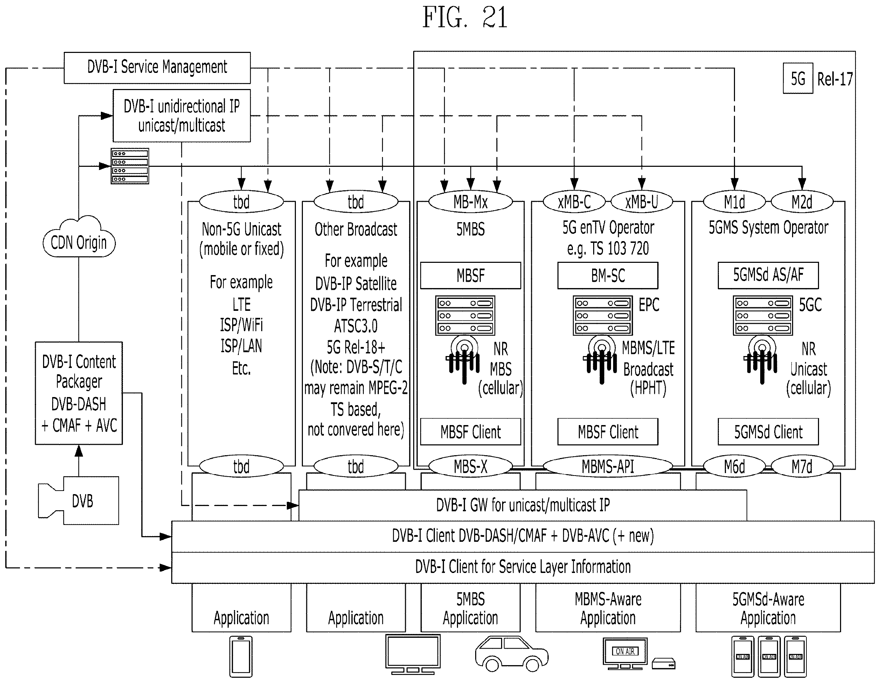

FIG. 21 shows DVB-I for network broadcast according to embodiments.

FIG. 21 shows a 3GPP 5G broadcast Rel. 16 which is the same communication network as 5G, and commercial DVB-I applications.

Since release 6 in 2005, parts to support MBMS have been defined. 3GPP standard establishment for TV service support has been discussed based on UTRAN to support the following requirements since release 14.

The free-to-air (FTA) service is supported under 3GPP as follows.

Only broadcast service for UEs without MNO broadcast subscription, support of shared eMBMS functions, content, decoupling of MBMS service and MBMS transport functions, eMBMS service and transport capability for third parties, networks dedicated to TV broadcast via eMBMS, Single Frequency Network (SFN) with Inter-Site Distance (ISD), ISD associated with cellular deployment, Receive-Only Mode (ROM) services and devices.

FIG. 21 illustrates methods for a DVB service provider to apply a DVB-I application through a 5G network. Methods for 5G broadcast include 5MBS through 5GNR and High Power High Tower through BMSC by applying the existing MBMS standard mutatis mutandis. When the DVB service/content provider and the 3rd party provider who has registered the service in the DVB-I service entry publish a service list through the DVB-I service, the DVB-I client may discover the corresponding services, and receive a media service over the 5G broadcast network.

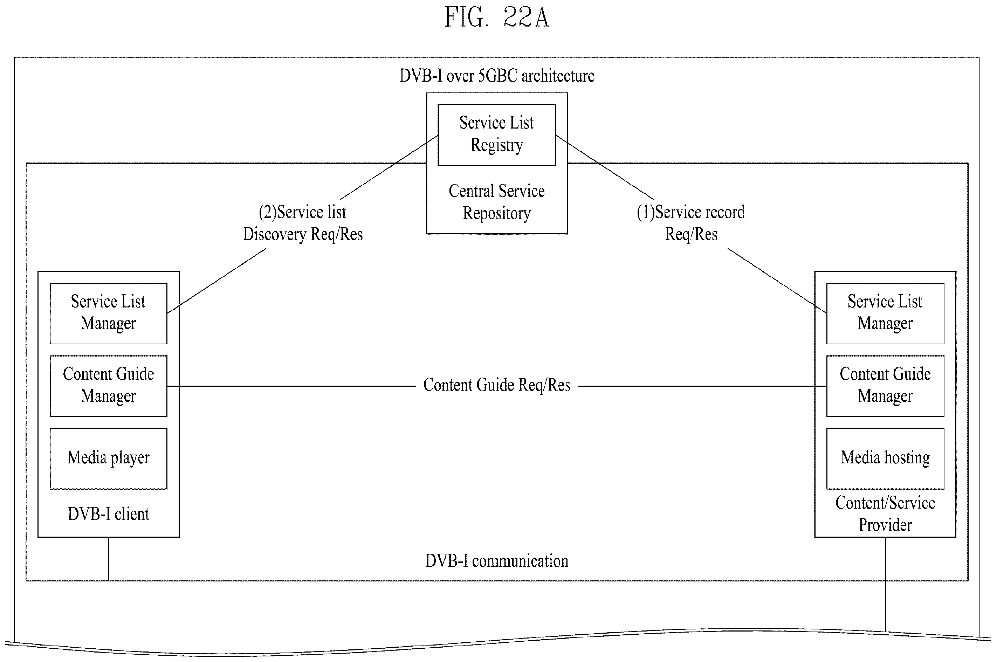

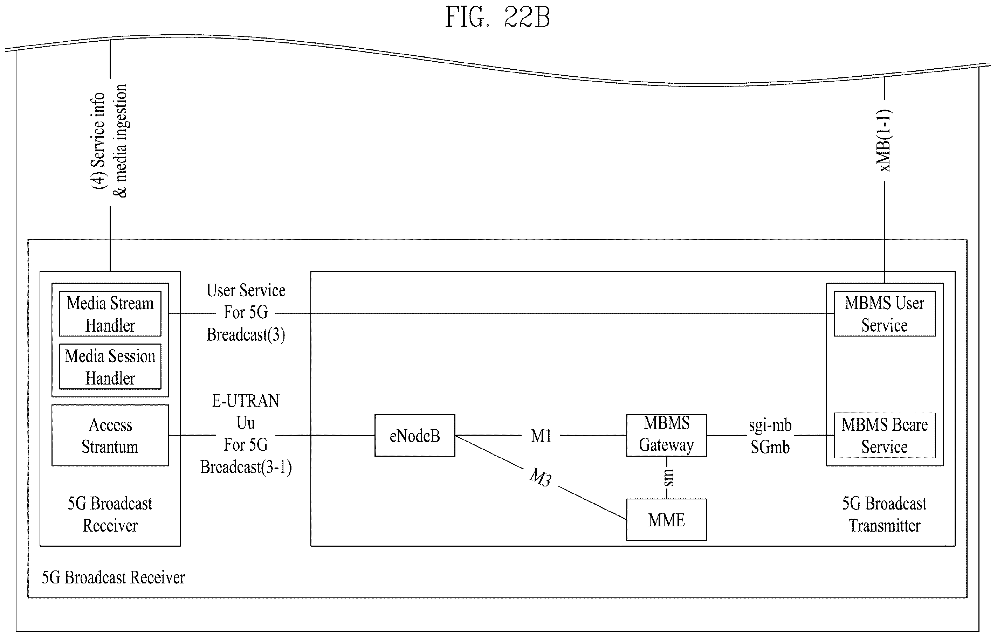

FIGS. 22A and 22B show DVB-I in a 5GBC structure according to embodiments.

The method/device according to the embodiments may provide a DVB-I service over a 3GPP 5G broadcast network.

The current DVB-I service is defined as a structure in which the DVB-I client receives a list of lists through the DVB central service repository and selects a service list when the service provider registers the service entry. DVB-I service delivery over the 5GBC network is not defined as a delivery method in the current DVB-I service list. The present disclosure proposes a solution for extending a delivery method at the same level as DVB-T/S/C in the DVB-I service list and allowing the DVB-I client, which may use the 5GBC network, to recognize unique information about a service defined in compliance with the 3GPP standard and receive the service.

The DVB-I over 5GBC architecture shown in FIG. 22 represents a method of receiving a service via an MBMS service bearer, an MBMS gateway, and an eNodeB by applying HPHT method similar to existing DVB broadcast physical transmission method and MBMS standard. Media transmission over the 5GBC network may allocate and issues service-unique information, and thus the UE may receive and consume each service separately. Therefore, the unique information may be extended and defined in the DVB-I service list to connect to the 5GBC network, perform service discovery, and retrieve media data.

A content/service provider registers a service list (service) in the central service repository according to DVB-I standard.

The same identification information about the service defined in the DVB-I service list is delivered to the BMSC via the xMB interface.

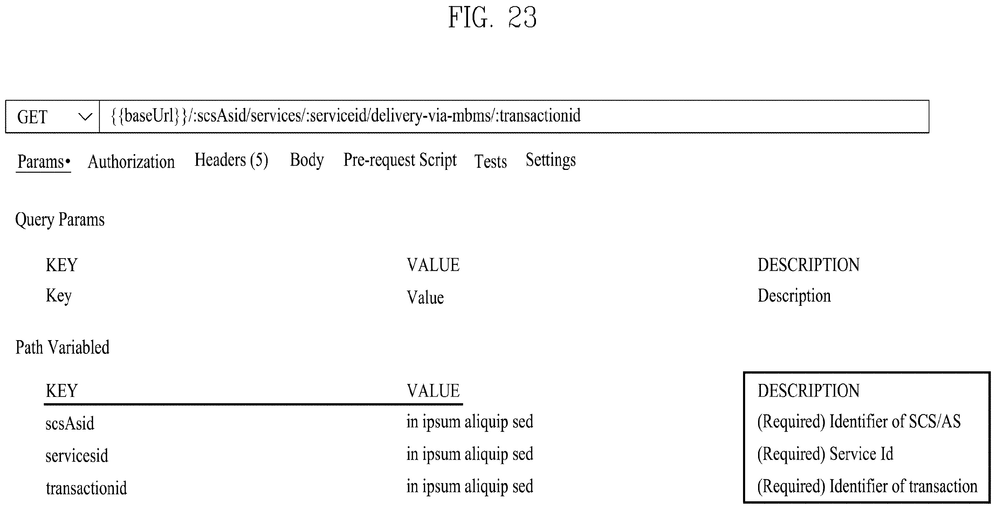

FIG. 23 illustrates a method of acquiring a group message through a service ID according to embodiments.

The method/device according to the embodiments may identify and acquire a group message based on an SCS/AS identifier, a service ID, and a transaction identifier.

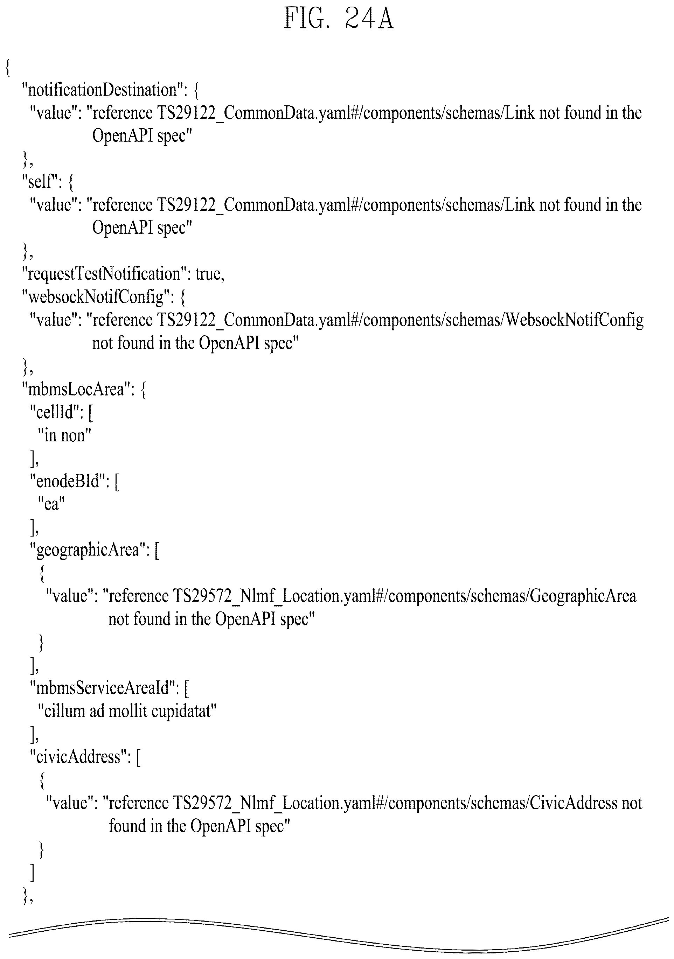

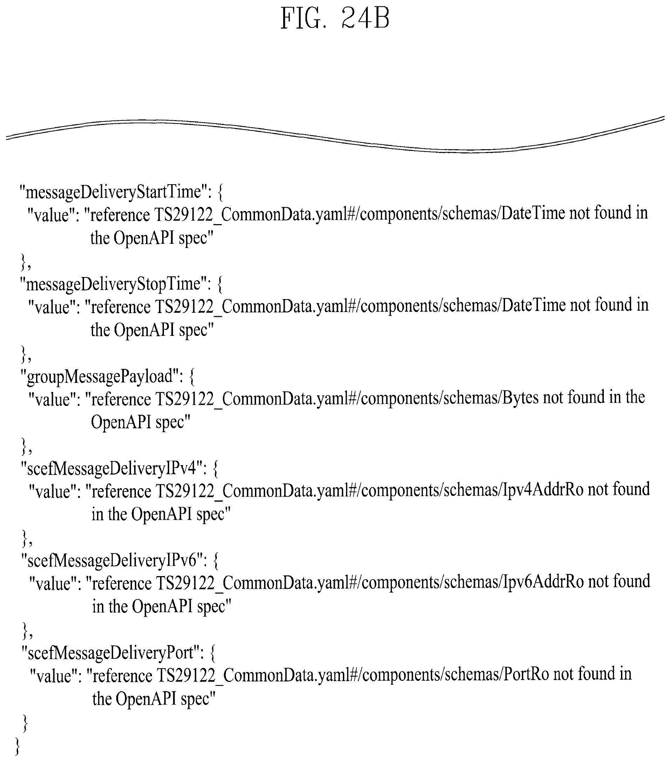

FIGS. 24A and 24B show a group message acquisition procedure according to embodiments.

When the service discovery request of the DVB-I client/MBMS client is automatically or manually executed, the procedure for acquiring the group message of the MBMS resource is performed. In this procedure, through an agreement between the MNO and the service provider, the agreed request/response procedure including unique information predefined based on the current UE location information or Geo IP information is performed. The request including service ID and transaction ID as shown in FIG. 24 is made.

A DVB-I list service discovery process according to embodiments is configured as follows.

The current DVB-I standard defines the service discovery query syntax as follows:
https://www.service-list-registry.com/query?<parameter1>=value1&<parameter2>=value2
parameter : TargetCountry, regulatorListFlag, Delivery, Language, Genre ProviderName, isLocal(New), isWAN(new)
e.g.) https://www.service-list registry.com/query?<targetCountry>=UK&<regulatorListFlag>=true&<Delivery>=5gbc&isLocal=true

The current DVB-I standard defines the following procedure.

"CSR bootstrap (access to service list server)-> receiving service list entry points (information for accessing a list of lists)-> selecting a service list URL-> receiving a service list (accessing the service lists and receiving a service list desired by the client)-> recognizing a postcode-based region ID in the service list-> selecting a service matching the region ID according to the current TV address-> selecting a service instance matching the Capability + Priority"

The DVB-I standard includes all local services in an area of the country in the service list without considering the method of receiving the service list based on the current location information. This method defines a technology for receiving unnecessary data because all local services are received regardless of the user's region/location.

In addition, when multiple values of a target country are inserted, potential errors are likely to be present on the DVB-I client side because of issues including massive data management and channel conflict. For example, when a DVB-I client app moves to a country, it receives an additional list to access services in the country. For example, when installation is performed with TargetCountry = UK, a shift is made to France, TargetCountry = FR is added, both local broadcast lists of the two countries are received.

Recently, with CDN technology, data is received by accessing data centers for regions/countries adjacent to each other, and there is also flexible creation and deletion of proxy/edge from 5GMS and BC perspectives. Thus, service bootstrapping from a mobile perspective that can recognize the current location of the base station or GPS may also be an "efficient" service approach.

Also, the current DVB-I standard does not define a method for default bootstrap for Mobile/5G. Therefore, it is required to acquire an efficient service list in a situation where there are various reception routes such as a vast list, mobility, and 5G broadcasting. The extendable approaches are: 1) CSR bootstrapping: CSR query extension; 2) Service list offering scheme extension: location-based information or 5G service-related information extension; 3) Service instance extension: service instance (new delivery)/source type/expansion for 5GBC.

The embodiments newly define the service default query for 5G/Mobile and use the current 5G (res IP) information (isWAN) or GPS information (consent required, isLocal) to receive a service list including services or service instances that may be received through Backend SQL.

In order to receive a list of 5G broadcasting, the receivable frequencies may be scanned based on the current location, and the DVB-I service repository including ?delivery = 5GBC among parameters may be accessed. DVB-I delivers ServiceListEntryPoints predefined in the DVB-I standard in response to the request. ServiceListEntryPoint contains a list of lists corresponding to the value, "5GBC". In this case, a 5GBC list receivable based on the current location information is carried in the current list, and services receivable in the interface according to the embodiments and unique information received via the interface may be identified and shown on DVB-I client service UI/UX through service (service instance) matching.

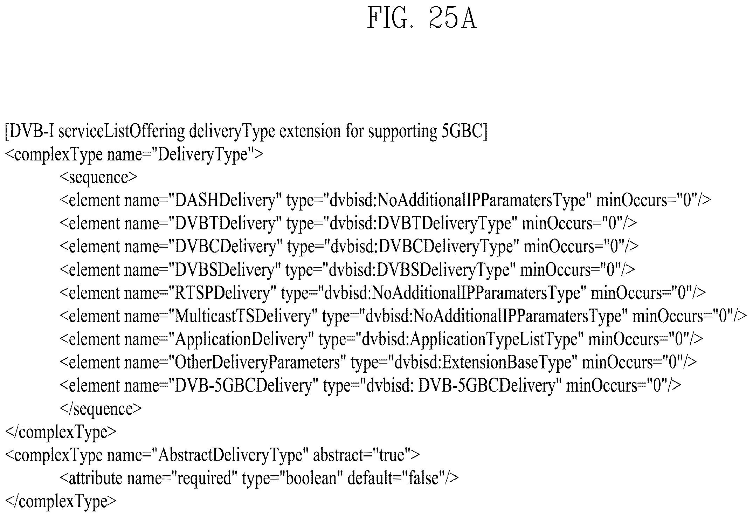

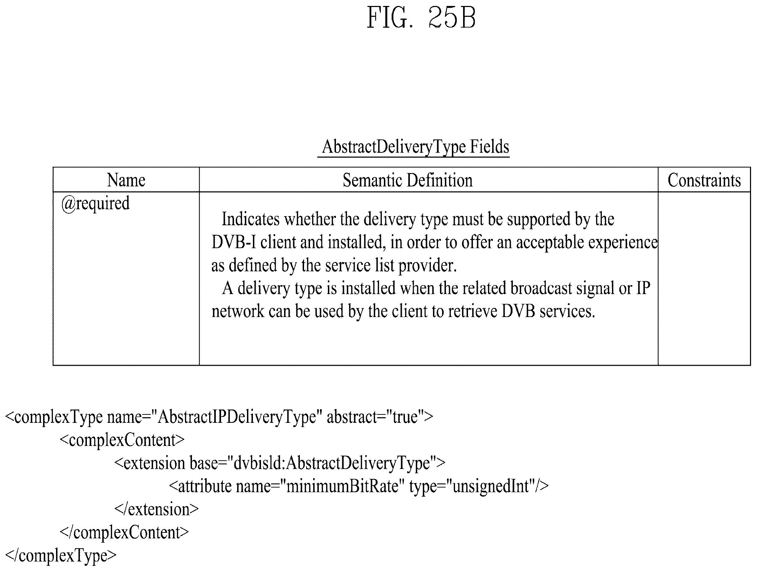

FIGS. 25A and 25B show an extension of a DVB-I service list offering delivery type for 5GBC according to embodiments.

DVB-5G delivery may be indicated through the element DVB-5GBCDelivery of the DVB-I service scheme according to embodiments.

The AbstractDeliveryType field indicates whether the delivery type should be supported and installed by the DVB-I client in order to provide an acceptable experience defined by the service list provider.

A delivery type is installed when the relevant broadcast signal or IP network is available for the client to retrieve a DVB service.

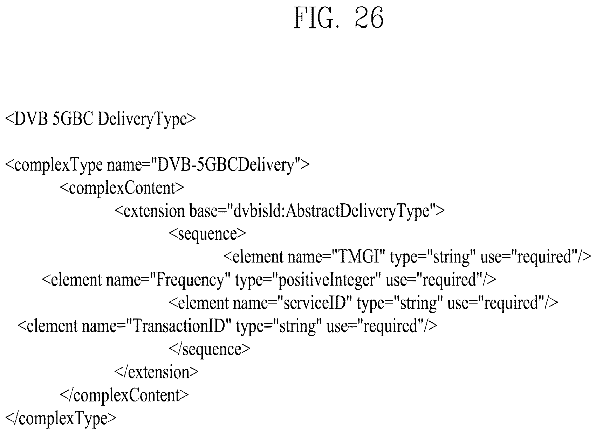

FIG. 26 shows a DVB 5GBC delivery type according to embodiments.

The delivery type of FIG. 78 may include an element as shown in FIG. 26.

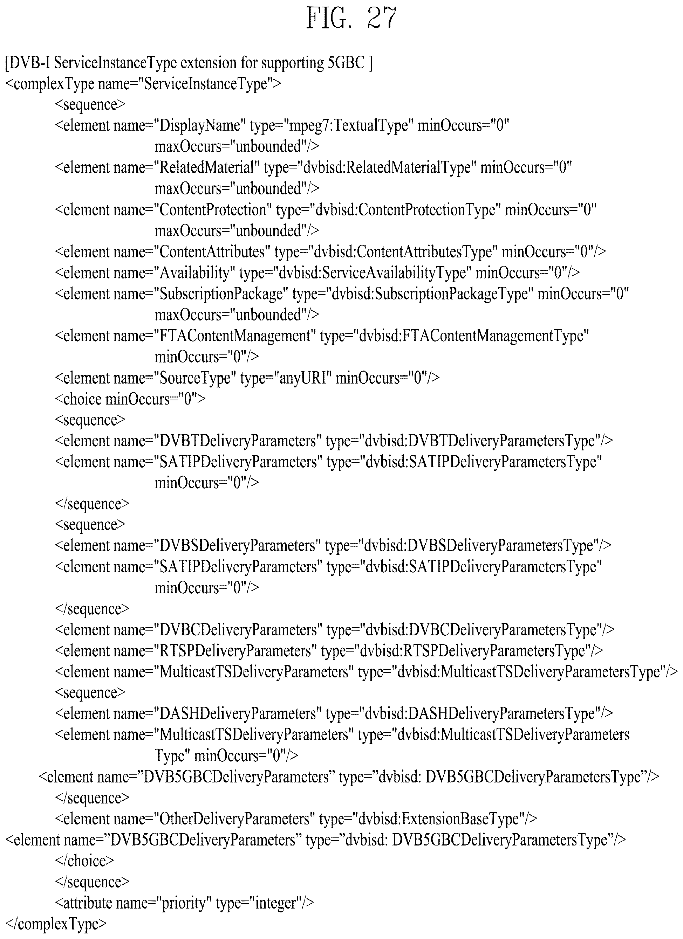

FIG. 27 shows a DVB-I service instance type extension for supporting 5GBC according to embodiments.

A DVB-I service scheme according to embodiments may include an extension value of the service instance type as shown in FIG. 27.

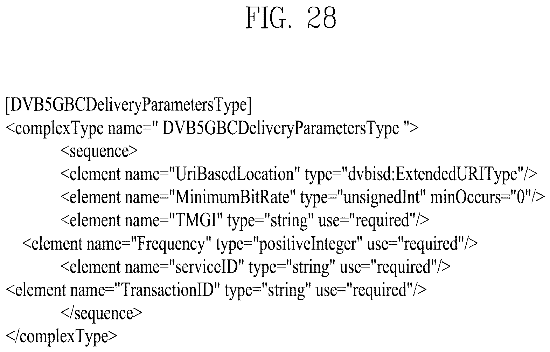

FIG. 28 shows a DVB 5GBC delivery parameters type according to embodiments.

A DVB-I service scheme according to embodiments may include a DVB 5GBC delivery parameter type as shown in FIG. 28.

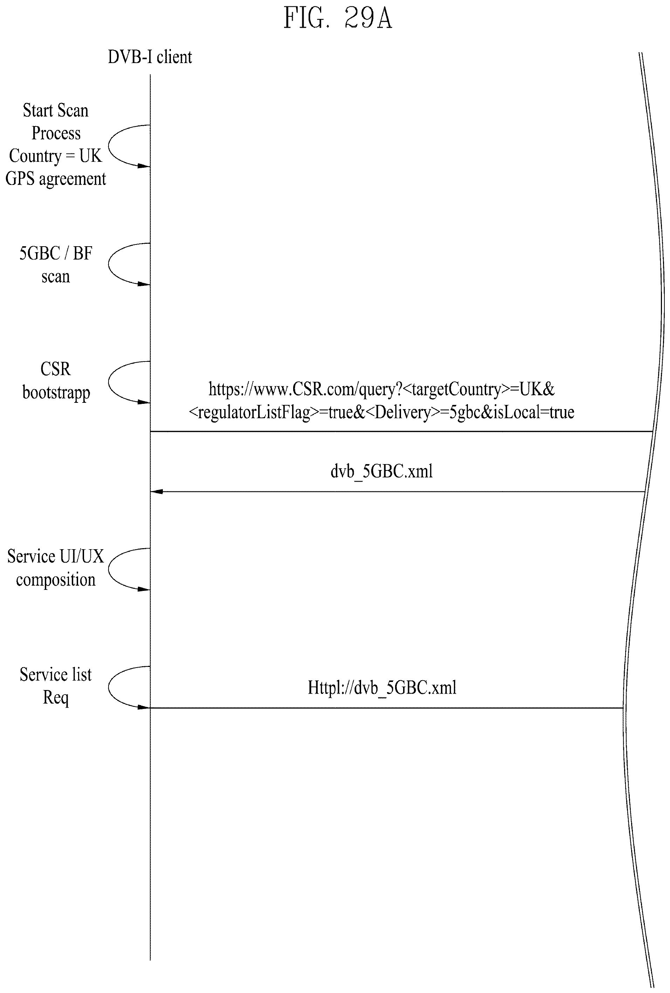

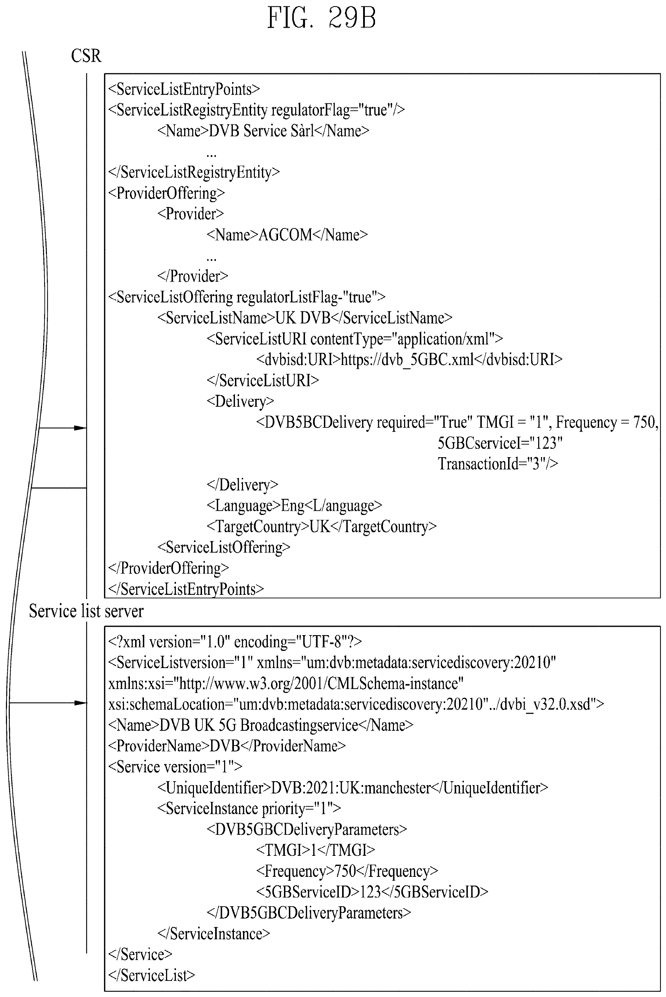

FIGS. 29A and 29B show a 5GBC service acquisition procedure according to embodiments.

The method/device according to the embodiments may acquire a 5GBC service based on FIGS. 25 to 28.

The 5GBC acquisition process of the method/device according to the embodiments of FIG. 29 includes the followings.
1) Scan start and terminal information acquisition, wherein capabilities, GPS, country, and the like may be acquired;
2) 5GBC/RF scan, wherein a BC signal received through RF is perceived;
3) CSR bootstrap, wherein a condition is added to the query through the information acquired in operation 1) and the user's selection received through the terminal, and information such as delivery = 5GBC and isLocal=true is added;
4) Receiving a list of lists of possible 5GBC signals, based on the current location reference;
5) Requesting a service list through Service list URL;
6) Acquiring the service list including 5GBC, and acquiring service instance information including a unique ID of 5GBC; and
7) Receiving a 5GBC service.

The method/device according to the embodiments may perform additional image extension for DVB-I backward compatibility.

The method/device according to the embodiments supports the DVB-I image types disclosed below.

The current DVB-I standard defines image elements applicable to UI/UX as follows:
Service list logo of PNG or JPG: has a small size.

Service logo in PNG or JPG: has a small size.

Content guide source logo in PNG or JPG: has a small size.

Program posters: have a full screen size.

The DVB-I standard defines the image URI according to the element scheme type, and the DVB-I client may configure an appropriate UI/UX within the screen. Currently, DVB-I defines an image definition method as the following xsd.

```
  <element name="RelatedMaterial" type="tva:RelatedMaterialType"
minOccurs="0" maxOccurs="unbounded"/>
  <complexType name="RelatedMaterialType">
  <sequence>
  <element name="HowRelated" type="tva:ControlledTermType" minOccurs="0"/>
  <element name="MediaLocator" type="dvbisd:ExtendedTVAMediaLocatorType" maxOccurs="unbounded"/>
  </sequence>
 </complexType>
 
```

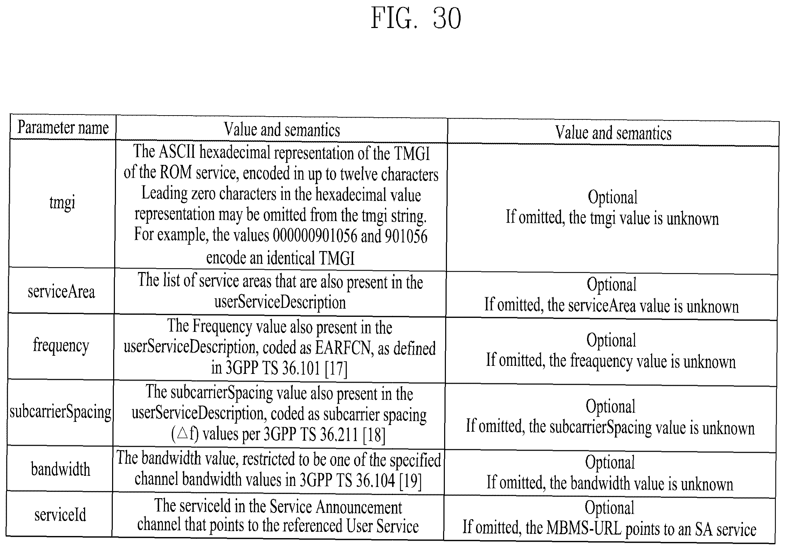

FIG. 30 shows 3GPP 5G transmission system information and information for connection between DVB-I applications according to embodiments.

Currently, 3GPP 5GBC/Receive-only Mode (ROM) defines unique selector information for discovery of 5G ROM service and service announcement channels according to each level and attribute.

FIG. 30 shows the information necessary in the 3GPP ROM. Each piece of information is unique for service discovery in ROM reception and may be utilized as essential information for discovery of 3GPP SA services over a 5G network from a DVB-I perspective.

Each parameter is defined as follows.

tmgi is the ASCII hexadecimal representation for the TMGI of the ROM service, encoded in up to twelve characters. serviceArea indicates the list of service areas that are present in the userServiceDescription.

frequency is present in the userServiceDescription, coded as EARFCN, as defined in 3GPP TS 36.101.

subcarrierSpacing is the subcarrierSpacing value also present in the userServiceDescription, coded as subcarrier spacing according to 3GPP TS 36.211.

bandwidth is the bandwidth value, which may be restricted to be one of the bandwidth values specified in 3GPP TS 36.104.

serviceId indicates the serviceId in the service announcement channel that points to the referenced user service.

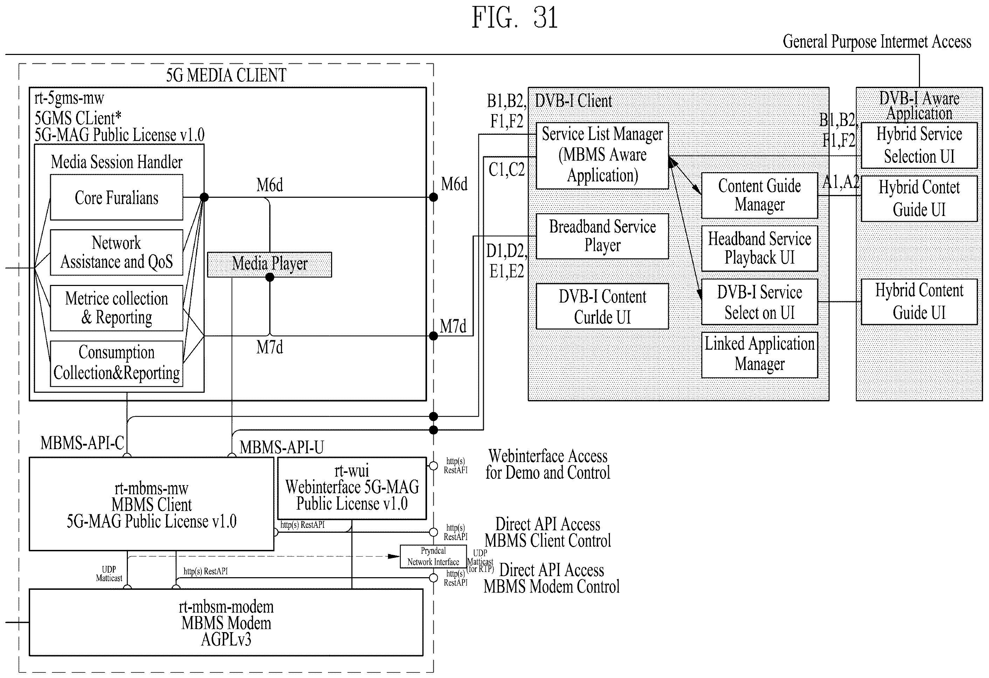

FIG. 31 shows a DVB-I over 5G receiver structure according to embodiments.

That is, it is a drawing of a DVB-I over 5G receiver, showing a reception module and interface I/O based on 3GPP Rel 16. The I/O for each module is described below.

MBMS modem (demodulator): This is a 5GBC reception only modem for 5G terrestrial broadcasting only reception. The input may be a 5G broadcast signal, the output may constitute a UDP multicast packet and the Rest API for direct interaction with the modem.

MBMS client: This module is responsible for UDP multicast packet de-packetizing and analysis of the FLUTE packet and service announcements (SAs). The input is a UDP multicast packet, and the output is SA and media segment cache.

5GMS Client: This is a module for receiving 5GMS unicast and may manage sessions. It is a module that includes a media player capable of playing out 5G packets. The input is a TCP packet or a media segment from an MBMS client and may be SA. The output may be media to be played or, when played by a DVB-I app, may be played on a third party player.

The DVB-I client is connected to the MBMS-API-C interface as shown in FIG. 31, and each interface may operate as an HTTP Rest API according to the DVB-I standard.

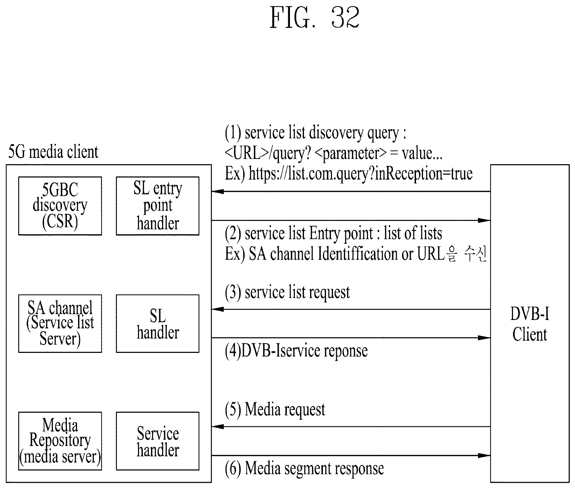

FIG. 32 shows a flow of DVB-I standard discovery-based 5G media discovery according to embodiments.

A method/device according to embodiments may include and perform operations for performing service discovery of a DVB-I standard-based 5G media client and a DVB-I client. A media processing device according to embodiments may be the 5G media client or the DVB-I client.

Unlike the structure of the conventional CSR, service list server, or media server (CDN), the 5G media client needs to directly process currently receivable signals and continuously scan service channels receivable over the signals.

The DVB-I client performs a request based on the DVB-I standard, and the 5G media client must comply with the call flow that conforms to the DVB-I standard for the request. Therefore, the DVB-I client and the 5G media client may perform service discovery through the procedure of operations (1) to (6) as shown in FIG. 45. In addition, since the SA channel information of 3GPP and the DVB-I standard scheme template have different characteristics, additional modules may be included to perform related operations.

Since DVB-I client and 5G media client have different XML template structures, XML template matching to information that can be interpreted by the DVB-I client is required, and essential information must be selected. In operation (1), the DVB-I client may perform the same procedure as the request method for the Service List Registry, by accessing the inside of the 5G media client through the query parameter. The conventional Service List Registry (e.g. CSR) may provision static service coverage. However, DVB-I over 5GBC includes not only fixed TV but also mobile, cases and it is difficult to provide provisioning according to individual reception status because it is difficult to predict the transmission coverage of various 5GBCs in respective regions. Accordingly, provisioning for receiving services available at the current location may be performed directly between the 5G media client and the DVB-I client.

Therefore, the parameter "inReception" may be extended to extend the query method when accessing the internal 5G media client.
https://www.service-list-registry.com/query?<parameter1>=value1&<parameter2>=value2
parameter : TargetCountry, regulatorListFlag, Delivery, Language, Genre ProviderName, isLocal,isWAN,Postcode,inReception

The description of the detailed process for each flow is given below.
(1) Operation of requesting service discovery query (https://www.service-list-registry.com/query?inRecption=true): The DVB-I client makes a request using the URL and query parameter predefined according to the DVB-I Service List Registry discovery method. It is a request for receiving service entries receivable by the current 5G media client. The SL entry point handler, which is a module that performs a function similar to DVB-I Service List Registry, generates entry point XML in the form of DVB-I standard scheme based on the information of SA. It also returns necessary information when receiving a DVB-I query. If access to the CSR or country-specific DVB-I service discovery server is valid, a DVB-I client with a non-ROM IP connection may check the presence of 5G service by performing an inReception query to the CSR or country-specific DVB-I service discovery server in operation (1).
(2) Operation of receiving service entry points: Entries currently receivable by the 5G media client through operation (1) are received. In this operation, accessible information including the unique ID addresses of the currently receivable SA channels may be included.
(3) Operation of requesting a service list: The SA channels within the service entry points received in (2) are accessed and SA service information is requested to acquire the corresponding list. The service list handler selects the service list information required for DVB-I service list discovery in an SA channel and generates the Service list XML.
(4) Operation of receiving DVB-I service list discovery scheme: Information for access to the media repository based on a scheme conforming to the DVB-I standard is received.
(5) Media request: The 5G media client makes a request to the media segment cache module that it currently receives over the 5G network.
(6) Media segment response: A media segment is received.

FIG. 33 shows a service list registry query method and service entry point extension method for accessing an MBMS SA channel in a DVB-I standard-based 5G media client according to embodiments.

When a request for a Service List Registry query is made to the internal 5G media client according to operation (1), the 5G media client returns XML containing information for access to the SA channel and conforming to the DVB-I service entry point to the DVB-I client. In this case, the information for access to the SA channel in the existing DVB-I client is currently absent and is required to be extended as shown below.

@ServiceListURI should contain information for accessing the SA channel of the 5G media client, and HTTP Restful access URI configuration is required according to the interface requirements of DVB-I. Therefore, the following template is needed: https://URL_string/(SA access channel information).

The unique information for accessing the SA channel within the 3GPP eMBMS standard is shown in FIG. 33. The DVB-I service list request template containing this information is mapped to the URL as follows:

### [MBMS information: URL - Implementation example of mapping]

https://rom.tmgi.3gpp.org&tmgi=901056&serviceArea=40201&frequency=68616&subCarrierSpacing=1.25&ba ndwidth=8

Therefore, when DVB-I accesses the @ServiceListURI location newly defined according to operation (3), the 5G media client may receive the accessible service list in the SA channel. It may access individual services in the received service list and valid service instances to receive channels and media.

As an additional option, operation (1) may be performed to
"https://rom.tmgi.3gpp.org&tmgi=901056& service Area=40201& frequency=68616&subCarrierSpacing=1.25&bandwidth=8" and a service list entry point including @ServiceListURI may be returned.

FIG. 34 shows extensions of DVB-I over 5G service types and service instance according to embodiments.

As shown in the receiver structure of FIG. 43, data that may provide DVB-I service discovery and media services is extracted from the 5G physical signal through demodulation and IP protocol de-packeting. The data packets are SA of 5G eMBMS and video/audio data. Currently, the DVB-I specification strongly recommends a DVB-DASH-based ABR support protocol. Therefore, media service providers over a 5G network should support service types and media data that comply with the profile of DVB DASH for service provisioning.

The DVB-I standard defines service types as follows. For example, a service supporting the HEVC service may be signaled by ServiceType, ContentAttribute, and VideoConformancePointsCS as disclosed below.

As shown in FIG. 34, a service list of services according to the respective service types may be signaled using ServiceType, ContentAttribute, and VideoConformancePointsCS.

Even for DVB-I over 5G supported services, the service type terms may be extended as shown below to support services suitable for the DASH protocol and the SA channels of 5G MBMS.

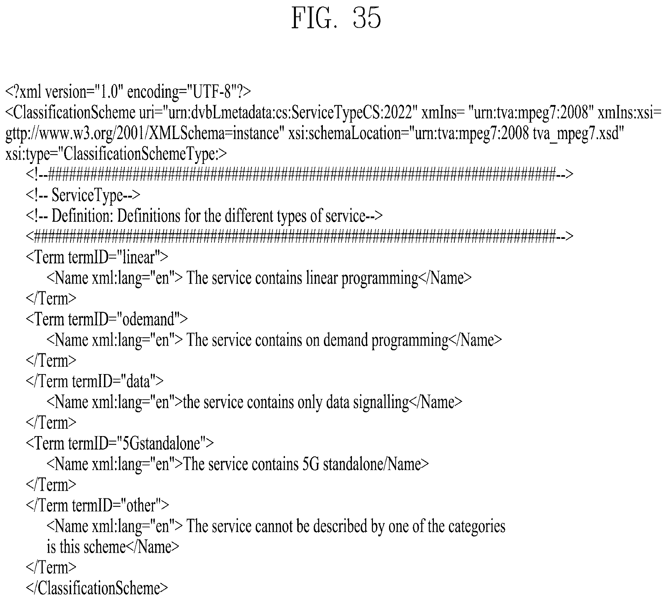

FIG. 35 shows a service type extension according to embodiments.

The extended termID="5GStandalone" is a service type that is supportable by a 5G standalone terminal. The service type indicates that a service may be discovered and provided according to the SA channel of the eMBMS. An implementation example of providing the HEVC codec over a 5G network as per the ServiceTypeCS extension is given below.
service_type is 0x1F, the description thereof is HEVC digital television service (see note 4), and the DVB-i service list may be signaled as follows
Service.ServiceType="urn:dvb:metadata:cs:ServiceTypeCS:2022: 5GStandalone"
Service.ServiceInstance.ContentAttributres.VideoAttributes.PictureFormat="urn:tva:metadata:cs:PictureFormat CS:2015:1.2" <!--HD --> or "urn:tva:metadata:cs:PictureFormatCS:2015:1.3" <!--UHD -->"
Service.ServiceInstance.ContentAttributes.VideoAttributes.FrameRate <= "120"
Service.ServiceInstance.ContentAttributres.VideoAttributes.Coding contains any HEVC related term from urn:dvb:metadata:cs: VideoConformancePointsCS:20 17

From the service instance perspective, since the media protocol conforms to DVB DASH, the related protocol signaling and service matching information needs to be extended. Currently, DVB-I ServiceInstanceType is defined as follows. Also, the properties of each parameter are defined according to each delivery Type.

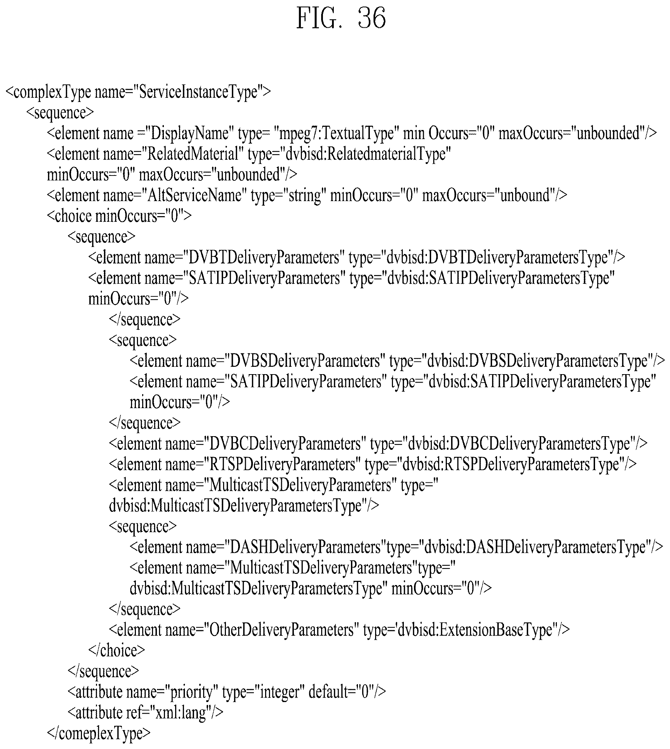

FIG. 36 shows ServiceInstanceType according to embodiments.

As mentioned earlier, the packets are configured in the DVB DASH format, and therefore the media protocol type received through transmission over a Rel16-based 5G network should be defined according to the properties of the DASHDeliveryParametersType.

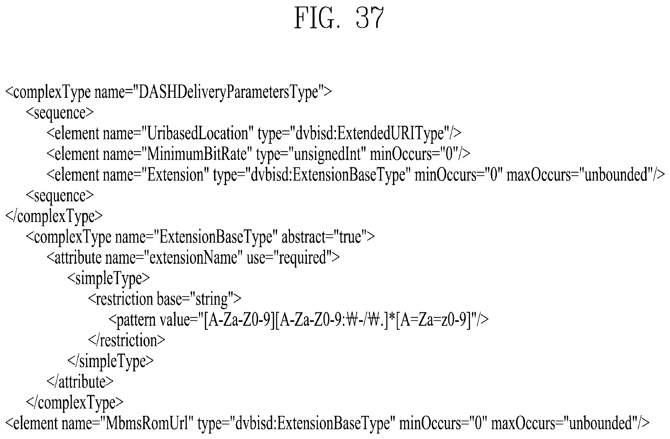

FIG. 37 shows DASHDeliveryParametersType according to embodiments.

### [Implementation Example]

@UriBasedLocation = https://contentlocoation.com/mbmsrom.mpd
@MbmsRomUrl = mbms://rom.tmgi.3gpp.org&serviceArea=40201&frequency=68616&subCarrierSpacing=1.25&bandwidth=8&serviceId=%22tel evision-service%22

An alternative form is:
https://rom.tmgi.3gpp.org&serviceArea=40201&frequency=68616&subCarrierSpacing=1.25&bandwidth=8&ser viceId=%22television-service%22.

According to the processes of FIGS. 31 and 32, the SA channel may be accessed through the unique service signaling of @MbmsRomUrl and the service may be received via the DASH engine according to @UriBasedLocation (MPD location).

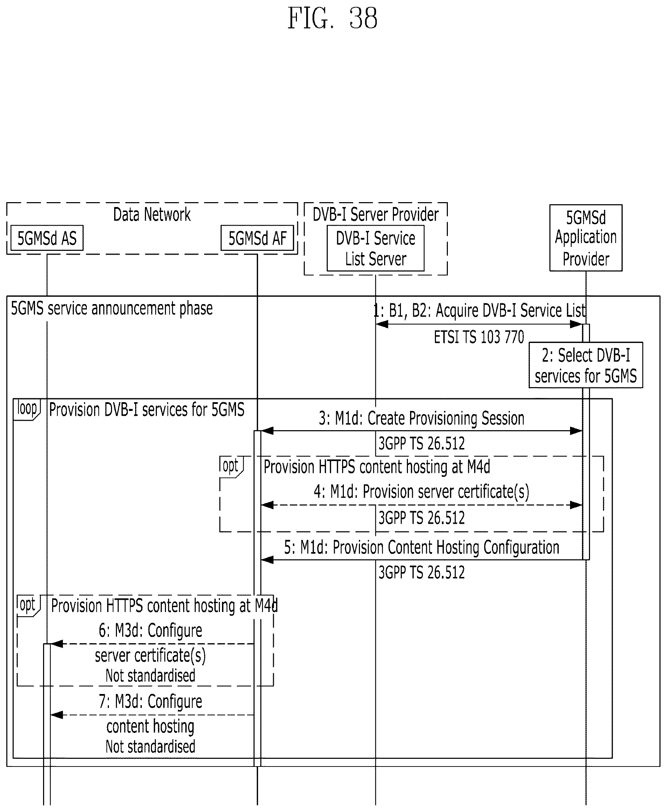

FIG. 38 is a flowchart illustrating provisioning of DVB-I services over 5G media streaming according to embodiments.

The client, which is a media data processing device according to embodiments such as FIG. 31, may process DVB-I services in a 5G media streaming manner based on a provider such as that shown in FIG. 38.

Regarding DVB-I over 5G media streaming, the service provisioning for DVB-I in the SGMS scenario is disclosed below.

The scenario according to embodiments provides a 5G system based DVB-I service as a 5G media streaming downlink service. The scenario in FIG. 38 may include: a service curation step of acquiring and selecting a DVB-I service provider and a SGMS application provider to provide the SGMS service during the service provisioning phase; and a step of service provisioning and content hosting in the data network for transmission.

The interface and protocols for implementing the 5G media streaming system according to the embodiments include a data network (DN), a DVB-I service provider, and a SGMS application provider. The DVB-I service provider performs appropriate interaction through the interface based on the DVB-I A177 standard for service curation, while the SGMS application provider and DN may refer to system attributes for provision of services based on 3GPP TS 26.512.

The DN includes logical functions such as the Application Function (AF) and the SGMS Application Server (AS). The AF serves as a control plane that performs service provisioning, configuration, consumption reporting, and the like. The AS serves as a data plane that ingests media data in a pull/push manner and performs data interaction with the SGMS client of the SGMS receiver.

FIG. 38 shows a sequential call flow representing the steps for DVB-I service provisioning through 5G media streaming. The steps are as follows:
1. Acquire a service list from the DVB-I service list server according to the procedure specified in ETSI TS 103 770 (A177) 5.1.2.
2. Select a DVB-I over SGMS service based on the service or service list level.
3. Create a provisioning session by the SGMSd AF by referencing the provisioning sessions API according to ETSI TS 26.512.
4. Perform required server certification in the created session.
5. Perform content hosting configuration for the media data to be actually provided using the content hosting provisioning API. For example, configuration for ingest data is provisioned in an appropriate protocol and format. The configuration is performed such that the DASH MPD or segment server may be ingested.
6. Perform authentication based on the results of server certification and configuration performed in steps 4 and 5.
7. Based on the result of the content hosting configuration, the AF configures a reference point of the media data for the AS.

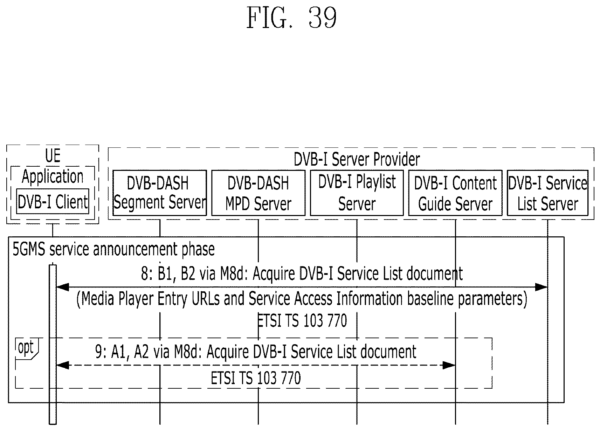

FIG. 39 is a flowchart illustrating discovery of DVB-I services according to embodiments.

The DVB-I client, which is a media data processing device according to embodiments, may discover DVB-I services, namely, Internet-based broadcast services, as shown in FIG. 39.

FIG. 39 illustrates a call flow in which the DVB-I client performs service discovery after service provisioning of the service provider and network operator in FIG. 38 and step 2 of selecting the SGMS service. Each step corresponds to the service discovery in DVB-IA177, but additional requirements from a DVB-I perspective may need to be defined to support SGMS services.

Details of each step are described below.

8. Access the service list server and acquire a service list according to DVB-I A177. After performing step 2, the service list should have the SGMS service marked up. As in current A177 Section 8.6.2, each service defines delivery parameters for each delivery type through <Service instance>, which is a sub-element. Among the parameters, DASHDeliveryParameters provides a URL for unicast-based service access. In the following description, as a schema of the DASHdeliveryParameters under services in A177, information that needs to be defined in providing unicast-based DASH services is defined.

However, currently, a SGMS based DVB-I service list is not present. Transport parameters required for support are not present, either.

9. Receive a DVB-I content guide. Data may be acquired through the method defined in A177.

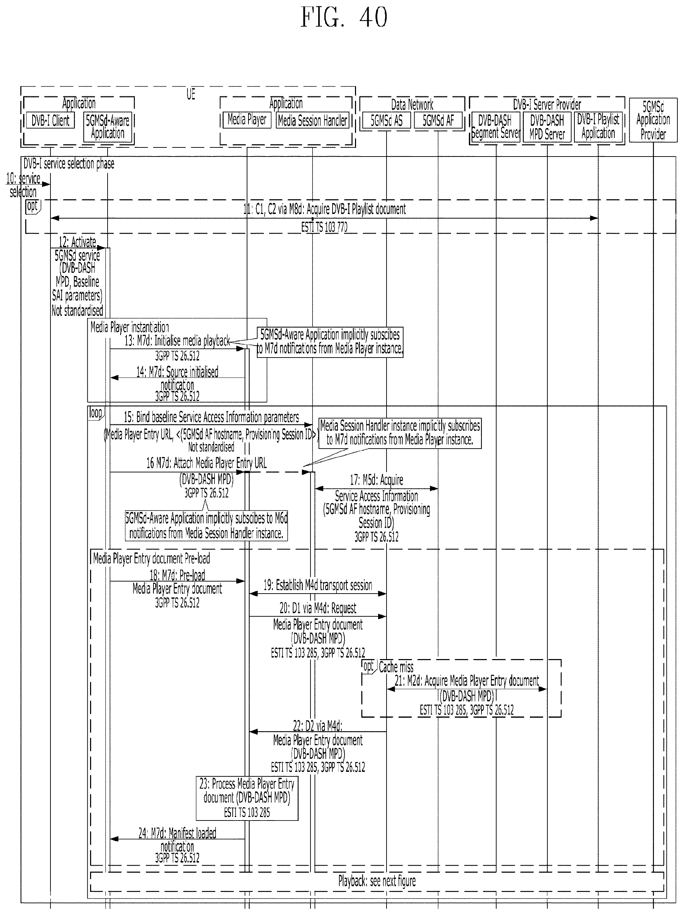

FIG. 40 is a flowchart illustrating selection of a DVB-I service according to embodiments.

FIG. 40 illustrates the service selection and bootstrap steps following the steps in FIG. 39.

Once the DVB-I client receives a service to be consumed by a user and determines the service instance that may be received, the DVB-I over SGMS client may receive media data through the procedure in FIG. 40. Each step in the flowchart means the following:
10. The DVB-I client receives a service to be consumed by a user and determines the service instance that may be received.
11. The DVB-I client may, when necessary, connect to the A177 playlist server and use the playlist attribute that collects MPD sets. The playlist or service(s) corresponding to 5G media streaming-supporting services include basic access information and provisioning information for transmitting 5G media streaming. The configuration information and related transmission session information assigned in steps 5 to 7 may be extended within the DVB-I service list. Based on the information, the transmission session may be identified through interaction with the 5G client receiving 5G data. Also, based on the information, the reception session of the SGMS instance may be identified.
12. Request a valid 5GMS-supported service instance.
13. 5GMS aware application is a module connecting a DVB-I client and a SGMS client, which is a kind of middleware that acquires and verifies the necessary information and enables each client to perform operations. It is a kind of logical unit module included in the DVB-I client that performs the necessary APIs. It initializes the media player. For example, it performs initialization of a DASH.js-based player or execute the initialize() Media Stream Handler API of TS26.512.
14. The SGMS-aware application initializes the source with the DVB-I client.
15. Using the SGMS signaling information included in step 11, binding between the layers of the DVB-I client and the 5G client is performed.
16. The DVB-I client calls the media session handler to access the Media Entry Points URL, which is the access location for the MPD set to be requested. For example, it utilizes the attach() Media Stream Handler API of TS26.512. Through this process, the media player may set the URL for access to the media data.
17. Transmission session and configuration information are provisioned, and the media data server ingested in the DN may be accessed. In this process, the 5GMSd AF hostname and the Provisioning Session ID of the SGMS downlink streaming service may be referenced, enabling the construction of a subsequent provisioned session for the selected DVB-I service.

Next, a method of extending service access information to support DVB-I over SGMS is described. That is, a description is given of an extension plan to include SGMS information such as the 5GMSd AF hostname and Provisioning Session ID, which are used in step 8 and the Service Selection & bootstrap (see FIG. 40) step, in the DVB-I service list. The following information is represented according to the DeliveryParameter in the ServiceInstanceType within the service Type in A177.

```
  <schema xmlns="http://www.w3.org/2001/XMLSchema"
 xmlns:dvbisd="urn:dvb:metadata:servicediscovery:2023" xmlns:mpeg7="urn:tva:mpeg7:2008"
 xmlns:tva="urn:tva:metadata:2023" xmlns:3gpp="urn:3gpp:metadata:2023"
 targetNamespace="urn:dvb:metadata:servicediscovery:2023" elementFormDefault="qualified"
 attributeFormDefault="unqualified">
  <import namespace="urn:tva:metadata:2023"
schemaLocation="tva_metadata_metadata_3-1.xsd"/>
  <import namespace="urn:tva:mpeg7:2008" schemaLocation="tva_mpeg7.xsd"/>
  <import namespace="http://www.w3.org/XML/1998/namespace" schemaLocation="xml.xsd"/>
 <import namespace=http://www.3gpp.org/.../namespace schemaLocation="3gpp.xsd"/>
  ...
 <sequence>
  <element name="DASHDeliveryParameters" type="dvbisd:DASHDeliveryParametersType"/>
  <element name="MulticastTSDeliveryParameters" type="
dvbisd:Multicast TSDelivery Parameters Type"
  minOccurs="0"/>
  </sequence>
  ...
 <complexType name="DASHDeliveryParametersType">
  <sequence>
  <element name="UriBasedLocation" type="dvbisd:ExtendedURIType"/>
  <element name="MinimumBitRate" type="unsignedInt" minOccurs="0"/>
  <element name="Extension" type="dvbisd:ExtensionBaseType"
 minOccurs="0" maxOccurs="unbounded"/>
  </sequence>
```

Embodiments extend the DVB-I schema and xsd to support SGMS transmission based on DASHDeliveryParameterType. Signaling information newly defined to support SGMS in the DVB-I service list may include SGMSdAFHostname information and ProvisioningSessionID information, which is used to confirm the provisioning session.

3GPP SGMS is differentiated from the existing streaming in LTE by more efficient use of physical and network resources and support of greater data capacity, which may allow richmedia to be provided. Further, it may enable seamless delivery of high-definition and ultra-high-definition video and audio content by providing high bandwidth. Also, the low latency of 5G is advantageous for real-time streaming. With these network characteristics, a consistent UX may be provided to consumers on various media platforms (e.g., VR, AR, OTT, etc.). When providing such SGMS services, service providers need two pieces of information to perform provisioning for 5G services that are different from existing LTE services. By extending this information in initialization information related to an application to be provided, a specific identity may be given to the services.

The methods of the options according to the embodiments maintain the DASH parameters and distinguish between the existing streaming services and SGMS within the DASH service. On the other hand, defining 3GPP SGMS as a higher-level type is not limited to the DASH service but is defined in the 3GPP SGMS service. From the perspective of client operation, the layer in which the host address and provisioning session ID are defined may vary depending on the service that defines them, and thus the client's operation may also be aligned accordingly. For example, when DASH is defined as the higher-level type, the service must operate on UEs limited to the DASH service, whereas with 3GPP SGMS, there is no dependency on DASH. The information that the UE may acquire through @UriBasedLocation is not only the DASH MPD, but also the Hypertext Transfer Protocol Live Streaming (HLS) .m3u8 file. Option 5 according to the embodiments defines SGMS as a separate delivery type.

The service access information according to the embodiments may be extended as follows.

```
  <!-- option 1 -->
  <complexType name="DASHDeliveryParametersType">
  <sequence>
  <element name="UriBasedLocation" type="dvbisd:ExtendedURIType"/>
  <element name="MinimumBitRate" type="unsignedInt" minOccurs="0"/>
  <!-- <element name="Extension" type="dvbisd:ExtensionBaseType"
 minOccurs="0" maxOccurs="unbounded"/>
 -->
  <element name="SGMSDeliveryParamters" type="dvbisd:
5GMSDeliveryParamtersType" minOccurs="0"/>
  </sequence>
  </complexType>
  <complexType name="5GMSDeliveryParamtersType">
  <sequence>
  <element name="SGMSdAFHostname" type="String"/>
  <element name="ProvisioningSessionID" type="dvbisd:ProvisioningSessionIDType"/>
  </sequence>
  </complexType>
  <simpleType name="ProvisioningSessionIDType">
 <restriction base="anyURI"/>
  </simpleType>
```

That is, the SGMSdAFHostname and ProvisioningSessionID may indicate that signaling information for SGMS is added to the service list according to embodiments.

```
  <option 1> may define the delivery type of SGMS
as a child element (or sub-element) within the
 DASHDeliveryParametersType. Existing DASH delivery
 parameters may be extended to support SGMS through extensions and
 optional elements. Option 1 allows for the addition
of SGMS source access information and service information to the existing
 DASH source, enabling legacy systems on the receiver
side to maintain compatibility while supporting extensions.
  <!-- option 2 -->
  <complexType name="DASHDeliveryParametersType">
  <sequence>
  <element name="UriBasedLocation" type="dvbisd:ExtendedURIType"/>
  <element name="MinimumBitRate" type="unsignedInt" minOccurs="0"/>
  <!-- <element name="Extension" type="dvbisd:ExtensionBaseType"
minOccurs="0" maxOccurs="unbounded"/>
 -->
  <element name="SGMSDeliveryParamters" type="dvbisd:
SGMSDeliveryParamtersType" minOccurs="0"/>
  </sequence>
 </complexType>
 <complexType name="5GMSDeliveryParamtersType">
 <sequence>
  <element name="SGMSdAFHostname" type="String"/>
  <element name="ProvisioningSessionID" type="3gpp:ProvisioningSessionIDType"/>
  </sequence>
  </complexType>
  <simpleType name-"ProvisioningSessionIDType">
  <restriction base="anyURI"/>
  </simpleType>
```

That is, SGMSdAFHostname and ProvisioningSessionID may be used to indicate that signaling information for SGMS is added to the service list according to the embodiments.

```
 <option 2> corresponds to the case where, unlike in <option 1>,
the type of ProvisioningSessionID references the
 type defined by 3GPP rather than the type defined in DVB-I.
  <!-- option 3 -->
  <complexType name="DASHDeliveryParametersType">
  <sequence>
  <element name="UriBasedLocation" type="dvbisd:ExtendedURIType"/>
  <element name="MinimumBitRate" type="unsignedInt" minOccurs="0"/>
  <!-- <element name="Extension" type="dvbisd:ExtensionBaseType"
 minOccurs="0" maxOccurs="unbounded"/>
 -->
  <element name="SGMSDeliveryParamters" type="anyURI" minOccurs="0"/>
  </sequence>
  </complexType>
```

In <option 3>, the SGMSDeliveryParameters may be defined as a value of the anyURI type. Similar to Section 8.6.6, the type may define a single URI by merging the SGMSdAFHostname information and ProvisioningSessionID into a string through URI mapping, as shown below.

```
  mbms://5gms.3gpp.org&5GMSdAFHostname=5gmsservicehost-cloudserver1&
ProvisioningSessionID=0001
  http://Sgms.3gpp.org&SGMSdAFHostname=
Sgmsservicehost-cloudserver 1& ProvisioningSessionID=0001
  <!-- option 4 -->
  <complexType name="DASHDeliveryParametersType">
  <sequence>
  <element name="UriBasedLocation" type="dvbisd:ExtendedURIType"/>
 <element name="MinimumBitRate" type="unsignedInt" minOccurs="0"/>
 <element name="Extension" type="dvbisd:ExtensionBaseType"
minOccurs="0" maxOccurs="unbounded"/>
  </sequence>
  <sequence>
  <element name="UriBasedLocation" type="dvbisd:ExtendedURIType"/>
  <element name="MinimumBitRate" type="unsignedInt" minOccurs="0"/>
  <element name="SGMSDeliveryParamters" type=" (option1, 2, 3) " minOccurs="0"/>
  </sequence>
  </complexType>
 <option 4> may define the SGMS service in the form of <sequence>,
allowing SGMS information to be defined.
 In option 4, the SGMSDeliveryParameters may include all the methods of options 1, 2, and 3.
  <!-- option 5 -->
  <sequence>
  <element name="DASHDeliveryParameters" type=
"dvbisd:DASHDeliveryParametersType"/>
  <element name="MulticastTSDelivery Parameters" type="
dvbisd:MulticastTSDelivery Parameters Type"
 minOccurs="0"/>
  <element name="SGMSDeliveryParamters" type="dvbisd:
SGMSDeliveryParamtersType" minOccurs="0"/>
  </sequence>
  <complexType name="DASHDeliveryParametersType">
 <sequence>
  <element name="UriBasedLocation" type="dvbisd:ExtendedURIType"/>
 <element name="MinimumBitRate" type="unsignedInt" minOccurs="0"/>
  <element name="Extension" type="dvbisd:ExtensionBaseType" minOccurs="0" maxOccurs="unbounded"/>
  </sequence>
  </complexType>
  <complexType name="5GMSDeliveryParamtersType">
  <sequence>
  <element name="UriBasedLocation" type="dvbisd:ExtendedURIType"/>
  <element name="MinimumBitRate" type="unsignedInt" minOccurs="0"/>
  <element name="SGMSdAFHostname" type="String"/>
  <element name="ProvisioningSessionID" type="3gpp:ProvisioningSessionIDType"/>
  </sequence>
  </complexType>
 
```

Option 5 defines a separate SGMS type. In other words, SGMS may be added independently from the existing DASH. The corresponding URI, such as UriBasedLocation, may be used to receive not only the manifest of MPEG-DASH but also an HLS (Hypertext Transfer Protocol Live Streaming) .m3u8 file. Thus, it is not necessarily dependent on DASH.

<option 5> may be defined to be selectable within the same sequence as the DASHDeliveryParametersType.

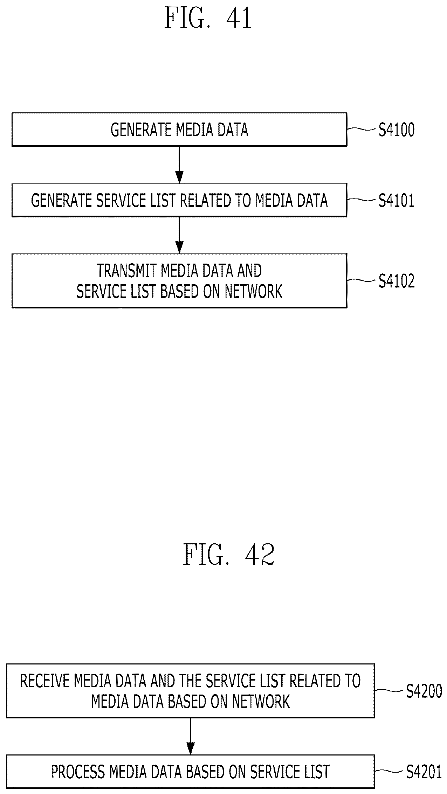

FIG. 41 illustrates a media data processing method according to exemplary embodiments.

In S4100, the media data processing method according to the embodiments may include generating media data.

In S4101, the media data processing method according to the embodiments may further include generating a service list related to the media data.

In S4102, the media data processing method according to the embodiments may further include transmitting the media data and the service list based on a network.

FIG. 42 illustrates a media data processing method according to embodiments.

In S4200, the media data processing method according to the embodiments may include receiving media data and a service list related to the media data based on a network.

In S4201, the media data processing method according to the embodiments may further include processing the media data based on the service list.

DVB-I according to embodiments refers to specifications related to Internet-based broadcasting services.

Referring to FIG. 32, regarding the operation of a 5G client, the media data processing method according to embodiments may include generating media data, generating a service list related to the media data, and transmitting the media data and the service list based on a network.

Referring to FIG. 32, regarding DVB-I (internet-based DVB) 5G media discovery flow, the media data processing method may further include receiving a query for discovery of a service list from a client, transmitting an entry point for the service list in response to the query, receiving a request for the service list, and transmitting the service list in response to the request. The service list may be related to an internet-based broadcasting service.

Referring to FIG. 38, regarding DVB-I provisioning by 5G media streaming, a service for 5G multicast streaming (SGMS) may be selected based on the service list.

Referring to FIG. 39, regarding DVB-I service discovery, the service list may include a service instance. The service instance may include DASH delivery parameter information. The DASH delivery parameter information may include information related to a unicast-based DASH service.

Referring to FIG. 40, regarding DVB-I selection, the service for the SGMS may be requested based on the service instance.

Regarding the service access information extension method to support DVB-I over SGMS, the DASH delivery parameter information may include SGMS host name information and provisioning session ID information for service access supporting the SGMS. That is, the DVB-I client may apply a 5GMSd aware application and may pass the URL of a media player entry, for example, DVB DASH MPE as a parameter. The URL may be the URL of the content of the DASH delivery parameter of the URI base location of the DVB-I service instance selected by the client side, or the URL of the presentation manifest selected from the DVB-I playlist. The baseline service access information parameter may include the SGMSd AF host address (host name) of the SGMS downlink streaming service and the provisioning session ID, and may also pass a 5GMSd aware application.

Additionally, regarding the extension method, the DASH (Dynamic Adaptive Streaming over HTTP) delivery type information may include delivery type information for the SGMS. The delivery type information for the SGMS may include SGMS host name information and provisioning session identification (ID) information, wherein the provisioning session ID information references a provisioning session ID related to 3GPP.

Further, regarding the extension method, the DASH delivery parameter information may include a SGMS delivery parameter, the SGMS delivery parameter being defined as a Uniform Resource Identifier (URI) value. The URI value may include the SGMS host name and provisioning session ID based on a string.

Additionally, regarding the extension method, the DASH delivery parameter information may include a SGMS delivery parameter in a sequence form. The SGMS delivery parameter includes SGMS host name information and provisioning session ID information. The provisioning session ID information references the provisioning session ID related to 3GPP. Alternatively, the SGMS delivery parameter is defined as a URI value. The URI value includes a SGMS host name and a provisioning session ID based on a string.

Additionally, regarding the extension method, a sequence of the DASH delivery parameter information may contain a SGMS delivery parameter, wherein the DASH delivery parameter information may include SGMS host name information and provisioning session ID information.

Referring to FIG. 35, a wireless communication based client, which is a media data processing apparatus that performs the media data processing method, may include a server storing media data, a server storing a service list related to the media data, and a processor configured to transmit the media data and the service list based on a network.

Referring to FIG. 32, the processing method for a DVB-I based client, which is a media data processing device, may include receiving media data and a service list related to the media data based on a network, and processing the media data based on the service list.

It may further include transmitting a query for discovery of the service list, receiving an entry point for the service list, transmitting a request for the service list; and receiving the service list. The service list may be related to an internet-based broadcasting service.

A DVB-I based client performing the media data processing method may include a memory and a processor connected to the memory. The processor may receive media data and a service list related to the media data based on a network, and process the media data based on the service list.

The processor may transmit a query for discovery of the service list, receive an entry point for the service list, transmit a request for the service list, and receive the service list. The service list is related to an internet-based broadcasting service.

According to the embodiments, the issue of the absence of binding information related to the SGMS provisioning information in the DVB-I service list, which supports DVB-I 5G media streaming based DVB-I technology, and the actually received SGMS data stream may be addressed.

The embodiments may extend related identification information within the delivery type used to provision SGMS in the DVB-I service list for additional information in order to identify the SGMS data requested through DVB-I service provisioning information and the actual received SGMS stream.

According to embodiments, in the Service Selection & bootstrap step may include, in the DVB-I service list, the SGMSd AF hostname and provisioning session ID information, which are SGMS information to be used.

According to embodiments, through the extension of the identification information of SGMS, SGMS streams may be clearly identified and services may be received within the receiver.

According to embodiments, physical and network resources may be used more effectively, and greater data capacity may be supported, which may allow richmedia to be provided. Further, it may enable seamless delivery of high-definition and ultra-high-definition video and audio content by providing high bandwidth. Also, the low latency of 5G is advantageous for real-time streaming. With these network characteristics, a consistent UX may be provided to consumers on various media platforms (e.g., VR, AR, OTT, etc.). When providing such SGMS services, service providers need two pieces of information to perform provisioning for 5G services that are different from existing LTE services. By extending this information in initialization information related to an application to be provided, a specific identity may be given to the services. Accordingly, service providers may offer SGMS as a paid service and gain business benefits, while consumers may enjoy media consumption across various platforms with guaranteed quality. For example, SGMS marking may be provided within the screen UI, and the extended information described above may be utilized to perform the client operations.

The embodiments have been described in terms of a method and/or a device. The description of the method and the description of the device may complement each other.

Although embodiments have been described with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may also fall within the scope of the appended claims and their equivalents. The devices and methods may not be limited by the configurations and methods of the embodiments described above. The embodiments described above may be configured by being selectively combined with one another entirely or in part to enable various modifications. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

### [Mode for Disclosure]

Various embodiments have been described in the best mode for carrying out the disclosure.

### [Industrial Applicability]

It will be apparent to those skilled in the art that various changes or modifications can be made to the embodiments within the scope of the embodiments. Thus, it is intended that the embodiments cover the modifications and variations of this disclosure provided they come within the scope of the appended claims and their equivalents.

## Claims

1. A method of processing media data, comprising:
generating media data;
generating a service list related to the media data; and
transmitting the media data and the service list based on a network.

2. The method of claim 1, further comprising:
receiving a query for discovery of the service list from a client;
transmitting an entry point for the service list in response to the query;
receiving a request for the service list; and
transmitting the service list in response to the request,
wherein the service list is related to an internet-based broadcasting service.

3. The method of claim 2, wherein a service for 5G multicast streaming (SGMS) is selected based on the service list.

4. The method of claim 3, wherein the service list comprises a service instance, the service instance comprising DASH delivery parameter information,
wherein the DASH delivery parameter information comprises information related to a unicast-based DASH service.

5. The method of claim 4, wherein the service for the SGMS is requested based on the service instance.

6. The method of claim 5, wherein the DASH delivery parameter information comprises SGMS host name information and provisioning session ID information for service access supporting the SGMS.

7. The method of claim 6, wherein the DASH delivery type information comprises delivery type information for the SGMS,
wherein the delivery type information for the SGMS comprises the SGMS host name information and provisioning session ID information, and
wherein the provisioning session ID information references a provisioning session ID related to 3GPP.

8. The method of claim 5, wherein the DASH delivery parameter information comprises a SGMS delivery parameter, the SGMS delivery parameter being defined as a URI value, and
wherein the URI value comprises a SGMS host name and a provisioning session ID based on a string.

9. The method of claim 5, wherein the DASH delivery parameter information comprises a SGMS delivery parameter in a sequence form,
wherein:
the SGMS delivery parameter comprises SGMS host name information and provisioning session ID information, the provisioning session ID information referencing a provisioning session ID related to 3GPP; or
the SGMS delivery parameter is defined as a URI value, the URI value comprising a SGMS host name and a provisioning session ID based on a string.

10. The method of claim 5, wherein a sequence of the DASH delivery parameter information contains a SGMS delivery parameter, and
wherein the DASH delivery parameter information comprises SGMS host name information and provisioning session ID information.

11. An apparatus for processing media data, comprising:
a server storing media data;
a server storing a service list related to the media data; and
a processor configured to transmit the media data and the service list based on a network.

12. A method of processing media data, the method comprising:
receiving media data and a service list related to the media data based on a network; and
processing the media data based on the service list.

13. The method of claim 12, further comprising:
transmitting a query for discovery of the service list;
receiving an entry point for the service list;
transmitting a request for the service list; and
receiving the service list,
wherein the service list is related to an internet-based broadcasting service.

14. An apparatus for processing media data, comprising:
a memory; and
a processor connected to the memory,
wherein the processor is configured to:
receive media data and a service list related to the media data based on a network; and
process the media data based on the service list.

15. The apparatus of claim 14, wherein the processor is configured to:
transmit a query for discovery of the service list;
receive an entry point for the service list;
transmit a request for the service list; and
receive the service list,
wherein the service list is related to an internet-based broadcasting service.
